# EUROPEAN PATENT APPLICATION

(11) **EP 4 797 823 A1**
(43) Date of publication of application: **26.08.2026**
(21) Application number: 24890664.6
(22) Date of filing: 12.11.2024
(51) Int. Cl.: H04W 68/00

(54) **COMMUNICATION METHOD AND APPARATUS**

(30) Priority: 13.11.2023 CN 202311509934
(71) Applicant: HUAWEI TECHNOLOGIES CO., LTD., Shenzhen 518129 (CN)
(72) Inventor: SENG, Shuming, Shenzhen, Guangdong 518129 (CN); LI, Chenwan, Shenzhen, Guangdong 518129 (CN); WU, Fangzhou, Shenzhen, Guangdong 518129 (CN)
(74) Representative: Thun, Clemens
(86) International application number: PCT/CN2024/131579
(87) International publication number: WO 2025/103309

(57) **Abstract**

This application relates to the field of communications technologies, and in particular, to a communication method and apparatus, which are used to resolve a problem of how a terminal device integrated with two or more capabilities communicates with a network device. The method includes: receiving a paging message, where the paging message is used to page a first-type terminal device, and the first-type terminal device has at least two working modes of an Ambient Internet of Things (IoT) terminal device; and if the first-type terminal device has at least two working modes of the ambient IoT terminal device, sending a random access request. By indicating the type of the terminal device (that is, the terminal device having a dual-mode (or multi-mode)) to be paged in the paging message, the network device can obtain the capability of the terminal device.

## Description

### CROSS-REFERENCE TO RELATED APPLICATIONS

This application claims priority to Chinese Patent Application No. 202311509934.3, filed with the China National Intellectual Property Administration on November 13, 2023, and entitled "Communication Method and Apparatus", which is incorporated herein by reference in its entirety.

### TECHNICAL FIELD

This application relates to the field of communication technologies, and in particular, to a communication method and apparatus.

### BACKGROUND

The working principle of passive radio frequency identification (RFID) technology is as follows: the tag converts the wireless signal emitted by the reader into energy, and uses this energy to power its own operation. In the development of communication, to reduce the power consumption of terminal devices, it has been proposed to introduce RFID technology into communication networks, such as Ambient Internet of Things (A-IoT). A-IoT is based on the cellular network communication infrastructure, and consists of readers (which are composed of passive/semi-passive/active tags). In this scenario, the tag functions as a terminal device in the cellular network, such as an extremely low power and extremely low complexity IoT terminal. The reader can be a base station. Currently, terminal devices in A-IoT can be classified into three categories: Class A devices (Device A), Class B devices (Device B), and Class C devices (Device C). Among these, Device A does not have energy storage and lacks the independent capability to generate or amplify signals. Device B has energy storage but does not have the independent capability to generate signals; the use of stored energy in Device B may include methods such as reflecting signals. Device C has both energy storage and the independent capability to generate signals. The communication methods may differ depending on the device type. For example, Device A and Device B rely on continuous waves sent by the base station to transmit data, while Device C can generate its own carrier wave to send data. Another example is that the internal crystal oscillator frequency offset of Device A and Device B is relatively large, which may result in an inability to accurately synchronize with network time, thus the access process is asynchronous. In contrast, the crystal oscillator of Device C can achieve synchronization with network time, so the access process can be synchronous.

However, current research on Device A, Device B, and Device C is conducted independently, without considering that terminal devices in A-IoT may integrate two or three of the capabilities of Device A, Device B, or Device C simultaneously. This means that a terminal device may possess the capabilities of both passive and active devices at the same time. If the terminal device independently executes each active or passive module without optimizing the process, the base station may fail to switch the communication mode in a timely manner. For example, when the terminal device switches to the passive module, the base station may still consider the terminal device as an active terminal, which could potentially prevent the smooth progress of the terminal's services.

### Summary

This application provides a communication method and apparatus, aiming to resolve the problem of how a terminal device integrated with two or more capabilities communicates with a network device.

According to a first aspect, a communication method is provided. The method may be performed by a terminal device, a chip, a chip system, or a circuit located in the terminal device. For example, the method may be performed by a first terminal device. The method may be implemented by using the following steps: The first terminal device receives a paging message; and the paging message is used to page the first-type terminal device, and the first-type terminal device has at least two operating modes of the environmental Internet of Things terminal device; and; If the first terminal device has at least two operating modes of the environmental Internet of Things terminal device, the first terminal device sends the random access request.

In this application, a terminal device having at least two working modes and an ambient IoT terminal device are considered. Because research on different working modes is independent of each other and communication manners are different, the network device indicates a type of a to-be-paged terminal device in a paging message, so that the network device can obtain a capability of the terminal device (that is, obtain a working mode supported by the terminal device), thereby helping the network device and the terminal device align a communication manner, thereby improving communication performance.

In a possible design, the paging message further indicates a working mode that needs to be supported by the first-type terminal device. In the foregoing manner, a specific working mode is indicated in the paging message, so that a terminal device that supports the working mode indicated in the paging message can respond to the network device, so that the network device can obtain the working mode supported by the to-be-paged terminal device.

In a possible design, the method further includes: sending, by the first terminal device, information A, where the information A is used to indicate a working mode supported by the first terminal device. In the foregoing manner, the first terminal device actively reports a specific working mode, so that the network device can obtain the working mode supported by the to-be-paged terminal device.

According to a second aspect, a communication method is provided. An execution body of the method may be a terminal device or a chip, a chip system, or a circuit in the terminal device. An example in which the execution body is a first terminal device is used. The method may be implemented through the following steps: The first terminal device sends first indication information, where the first indication information indicates a working mode supported by the first terminal device, and the first terminal device has at least two working modes of an ambient IoT terminal device.

In this application, a terminal device having at least two working modes of an ambient IoT terminal device is considered. Because research on different working modes is independent of each other and communication manners are different, the terminal device reports a working mode supported by the terminal device, so that the network device can obtain a capability of the terminal device (that is, obtain a working mode of the terminal device), thereby helping the network device align a communication manner with the terminal device, thereby improving communication performance.

In a possible design, the first indication information is carried in a random access request, or the first indication information is carried in a registration request.

In this manner, the first terminal device reports the working mode in the random access request or the registration request, so that the network device can learn the capability of the first terminal device as early as possible.

The first terminal device reports the working mode in the random access request, so that the network device may determine the random access manner of the first terminal device based on the working mode. For example, if the first terminal device works in the third mode, a synchronous access manner may be used, for example, the first terminal device may receive a system message, a synchronization signal, or the like, determine a random access resource, and perform clock synchronization/frame synchronization with the network device, where the access manner may be based on a two-step or four-step random access. If the first terminal device works in the first mode or the second mode, the first terminal device does not support system information, and does not support precise clock/frame synchronization with the network device. Therefore, the first terminal device may perform asynchronous access based on a downlink trigger signal (for example, Query signaling or QueryRep signaling), for example, an asynchronous access manner based on Aloha may be used.

The first terminal device reports the working mode in the registration request, and the network device may trigger a downlink service based on the working mode of the first terminal device. For example, if the first terminal device works in the first mode/the second mode, the network device may send a carrier and/or an energy signal (or control/trigger another terminal device or network device to send a carrier and/or an energy signal), so that the first terminal device working in the first mode/the second mode performs reflective communication. If the first terminal device works in the third mode, the network device may not need to send a carrier and/or an energy signal (the network device may not need to control/trigger another terminal or network device to send a carrier and/or an energy signal). In addition, if the first terminal device works in the first mode/the second mode, the first terminal device may not need to receive system information to determine information such as a random access resource, frame number information, or a cell identifier (identification, ID), and does not need to perform synchronization depending on a synchronization signal. If the first terminal device works in the third mode, the first terminal device may receive system information and/or a synchronization signal from the network device to determine information such as a random access resource, frame number information, or a cell ID, and perform synchronization.

Based on the first aspect and the second aspect, the following design is provided:
According to a possible design, the working mode of the ambient IoT terminal device includes a first mode, a second mode, or a third mode, where the first mode and the second mode support reflective communication, the third mode supports active communication, and power consumption in the first mode is less than power consumption in the second mode.

According to a possible design, the method further includes: receiving, by the first terminal device, a first message, where the first message is used to instruct the first terminal device to switch the working mode. In this manner, the network device can flexibly switch the working mode of the terminal device, and instruct the terminal device to use different working modes in different scenarios, thereby improving communication quality or reducing power consumption of the terminal device, or the like.

According to a possible design, before the first message is received, the method further includes: sending, by the first terminal device, at least one of the following: indication information about reference signal quality, indication information about a power level, indication information about a data volume, or a service type. In this manner, the terminal device reports the communication parameter of the terminal device for reference by the network device. For example, the network device may flexibly switch the working mode of the terminal device based on a communication scenario (for example, a low signal quality scenario, a high signal quality scenario, a low power scenario, or a high power scenario).

In a possible design, before receiving the first message, the method further includes: the first terminal device sends at least one of the following: first information, second information, third information, or a service type, where the first information indicates a relationship between the reference signal quality and the first signal quality threshold, the second information indicates a relationship between the battery level and the first battery level threshold, and the third information indicates a relationship between the data volume and the first data volume threshold. In a possible design, the method further includes: the first terminal device receives at least one of the following: the first signal quality threshold, the first battery level threshold, or the first data volume threshold. In the foregoing manner, the threshold is configured by the network device, thereby further improving flexibility of switching the working mode.

In a possible design, the method further includes: the first terminal device determines to switch the working mode based on at least one of the following: fourth information, fifth information, sixth information, or a service type, where the fourth information includes the reference signal quality and the second signal quality threshold, the fifth information includes the battery level and the second battery level threshold, and the sixth information includes the data volume and the second data volume threshold; and sending a second message, where the second message is used to request switching the working mode. In the foregoing manner, the terminal device may switch the working mode based on a requirement, and request to switch to the working mode in different scenarios, thereby improving communication quality or reducing power consumption of the terminal device, or the like.

In a possible design, the method further includes: receiving, by the first terminal device, at least one of the following: a second signal quality threshold, a second battery level threshold, and a second data volume threshold. In the foregoing manner, the threshold is configured by the network device, thereby further improving flexibility of switching the working mode.

In a possible design, the method further includes: sending, by the first terminal device, third indication information, where the third indication information indicates the working mode of the first terminal device.

According to a third aspect, a communication method is provided. An execution body of the method may be a network device or a chip, a chip system, or a circuit in the network device. Using an example in which the method is performed by the network device, the method may be implemented through the following steps: A network device sends a paging message, where the paging message is used to page a first-type terminal device, and the first-type terminal device has at least two working modes of an ambient IoT terminal device; and the network device receives a random access request.

In a possible design, the paging message further indicates a working mode that needs to be supported by the first-type terminal device.

In a possible design, the method further includes: receiving, by the network device, information A, where the information A is used to indicate a working mode supported by the first terminal device.

According to a fourth aspect, a communication method is provided. An execution body of the method may be a network device or a chip, a chip system, or a circuit in the network device. Using the network device as an example, the method may be implemented through the following steps: A network device receives second indication information, where the second indication information indicates a working mode supported by a first terminal device, and the first terminal device has at least two working modes of an ambient IoT terminal device.

In a possible design, the second indication information is carried in a random access request, or the second indication information is carried in a registration request.

Based on the third aspect and the fourth aspect, the following designs are included:
In a possible design, the method further includes: sending, by the network device, a first message, where the first message is used to indicate a working mode to be switched.

In a possible design, the method further includes: receiving, by the network device, at least one of the following: indication information about reference signal quality, indication information about an power level, indication information about a data volume, or a service type; and determining the working mode of the terminal device for switching based on at least one of the following: reference signal quality, a power level, a data volume, or a service type.

In a possible design, the method further includes: receiving, by the network device, at least one of the following: first information, second information, third information, or a service type, where the first information is used to indicate a relationship between the reference signal quality and a first signal quality threshold, the second information is used to indicate a relationship between the power level and a first power level threshold, and the third information is used to indicate a relationship between the data volume and a first data volume threshold; and determining the working mode of the terminal device for handover based on at least one of the following: the first information, the second information, the third information, or the service type.

In a possible design, the method further includes: sending, by the network device, at least one of the following: a first signal quality threshold, a first power level threshold, or a first data volume threshold.

In a possible design, the method further includes: receiving, by the network device, a second message, where the second message is used to request to switch the working mode.

In a possible design, the method further includes: sending, by the network device, at least one of the following: a second signal quality threshold, a second power threshold, or a second data volume threshold.

In a possible design, the method further includes: receiving, by the network device, third indication information, where the third indication information indicates the working mode of the first terminal device.

According to a fifth aspect, a communication method is provided. An execution body of the method may be a core network device or a chip, a chip system, or a circuit located in a core network device. Using the core network device as an example, the method may be implemented through the following steps: A core network device receives first indication information from a first terminal device, where the first indication information indicates a working mode supported by the first terminal device, and the first terminal device has at least two working modes of an environmental Internet of Things terminal device; and the core network device sends second indication information to a network device, where the second indication information indicates the working mode supported by the first terminal device.

In a possible design, the first indication information is carried in a registration request.

In a possible design, the second indication information is carried in a paging message.

In a possible design, that the second indication information indicates a working mode supported by the first terminal device is specifically: the second indication information is a first identifier, and the first identifier is used to represent the working mode of the terminal device. In the foregoing design, the association relationship between the identifier and the working mode is predefined, so that the network device may determine, based on the first identifier, the working mode supported by the terminal device. In addition, compared with a manner of indicating a specific working mode, the foregoing manner can save signaling resources.

In a possible design, the working mode of the ambient IoT terminal device includes a first mode, a second mode, or a third mode, where the first mode and the second mode support reflective communication, the third mode supports active communication, and power consumption in the first mode is less than power consumption in the second mode.

According to a sixth aspect, a communication method is provided. An execution body of the method may be a first terminal device or a chip, a chip system, or a circuit in the first terminal device. Using the first terminal device as an example, the method may be implemented through the following steps: A first terminal device receives a first message, where the first message is used to indicate switching of a working mode of the first terminal device, and the first terminal device has at least two working modes of an ambient IoT terminal device.

In this application, a terminal device having at least two working modes and an ambient IoT terminal device are considered. Because research on different working modes is independent of each other and communication manners are different, the network device may flexibly control the working mode of the terminal device in the foregoing manner, so that the network device may align a communication manner with the terminal device, thereby improving communication performance.

In a possible design, the working mode of the ambient IoT terminal device includes a first mode, a second mode, or a third mode, where the first mode and the second mode support reflective communication, the third mode supports active communication, and power consumption in the first mode is less than power consumption in the second mode.

In a possible design, before the first message is received, the method further includes: sending, by the first terminal device, at least one of the following: indication information for reference signal quality, indication information about a power level, indication information for a data volume, or a service type.

In a possible design, before the first message is received, the method further includes: sending, by the first terminal device, at least one of the following: first information, second information, third information, or a service type, where the first information is used to indicate a relationship between the reference signal quality and a first signal quality threshold, the second information is used to indicate a relationship between the power level and a first power level threshold, and the third information is used to indicate a relationship between the data volume and a first data volume threshold.

Through the foregoing two methods, the network device can flexibly switch the working mode of the terminal device according to a communication scenario (for example, a low signal quality scenario, a high signal quality scenario, a low power scenario, a high power scenario, or the like), and indicate the terminal device to use different working modes in different scenarios, which helps improve communication quality or reduce power consumption of the terminal device, or the like.

For example, when indoor coverage is good or when the first terminal device is relatively close to the network device, the first mode or the second mode is used to reduce power consumption of the terminal device; or when outdoor coverage is poor or when the first terminal device is relatively far away from the network device, the third mode is used to ensure a coverage requirement of communication. Alternatively, the working mode may be switched according to a service requirement. For example, for a sensing service, if an amount of data to be transmitted is relatively large and/or a transmission delay requirement is relatively high, the working mode is switched to the third mode; or for an inventory service, if an amount of data to be transmitted is relatively small and/or a transmission delay requirement is relatively low, the working mode is switched to the first mode or the second mode. For an active initiated (mobile originated, MO) service, the third mode may be used; for a mobile-terminated (mobile terminated, MT) service, the first mode or the second mode may be used. Alternatively, the working mode may be switched according to link quality. For example, when link quality is relatively good, the first mode or the second mode is used, for example, a relatively low-complexity coding manner (for example, adjusting a coding manner, adjusting a bit rate, or the like) is used, or a bandwidth configuration is reduced, to save communication resources and reduce power consumption of the terminal device, or the like. When link quality is relatively poor, the third mode is used to improve communication quality or coverage capability. Alternatively, the working mode may be switched according to the power level of the first terminal device. The power consumption of the first mode is lower than that of the second mode, and the power consumption of the second mode is lower than that of the third mode, thereby reducing power consumption of the terminal device.

In a possible design, the method further includes: receiving, by the first terminal device, at least one of the following: a first signal quality threshold, a first power threshold, or a first data volume threshold. In this manner, the threshold is configured by the network device, thereby further improving flexibility of switching the working mode.

In a possible design, the method further includes: sending, by the first terminal device, third indication information, where the third indication information indicates the working mode of the first terminal device.

According to a seventh aspect, a communication method is provided. An execution body of the method may be a network device or a chip, a chip system, or a circuit in the network device. Using the network device as an example, the method may be implemented through the following steps: A network device sends a first message, where the first message is used to indicate switching of a working mode of the first terminal device, and the first terminal device has at least two working modes of an ambient IoT terminal device.

In a possible design, the working mode of the ambient IoT terminal device includes a first mode, a second mode, or a third mode, where the first mode and the second mode support reflective communication, the third mode supports active communication, and power consumption in the first mode is less than power consumption in the second mode.

In a possible design, before the first message is sent, the method further includes: receiving, by the network device, at least one of the following: indication information for reference signal quality, indication information about a power level, indication information for a data volume, or a service type.

In a possible design, before the first message is sent, the method further includes: receiving, by the network device, at least one of the following: first information, second information, third information, or a service type, where the first information is used to indicate a relationship between the reference signal quality and a first signal quality threshold, the second information is used to indicate a relationship between the power level and a first power level threshold, and the third information is used to indicate a relationship between the data volume and a first data volume threshold.

In a possible design, the method further includes: sending, by the network device, at least one of the following: a first signal quality threshold, a first power level threshold, or a first data volume threshold.

In a possible design, the method further includes: receiving, by the network device, third indication information, where the third indication information indicates an operating mode of the first terminal device.

For some possible designs and beneficial effects of the seventh aspect, refer to the sixth aspect, and details are not described again.

According to an eighth aspect, a communication method is provided. An execution body of the method may be a terminal device or a chip, a chip system, or a circuit in the terminal device. Using an example in which the execution body is a first terminal device, the method may be implemented through the following steps: The first terminal device determines, based on at least one of the following items, a working mode for switching the terminal device: fourth information, fifth information, sixth information, or a service type, where the fourth information includes reference signal quality and a second signal quality threshold, the fifth information includes a battery level and a second battery level threshold, the sixth information includes a data volume and a second data volume threshold, and the first terminal device has at least two working modes of an ambient IoT terminal device; and the first terminal device sends a second message, where the second message is used to request switching the working mode.

The first terminal device may switch the working mode based on a requirement, and request to switch to the working mode in different scenarios, thereby improving communication quality, reducing power consumption of the terminal device, or the like.

In a possible design, the working mode of the ambient IoT terminal device includes a first mode, a second mode, or a third mode, where the first mode and the second mode support reflective communication, the third mode supports active communication, and power consumption in the first mode is less than power consumption in the second mode.

In a possible design, the method further includes: receiving, by the first terminal device, at least one of the following: a second signal quality threshold, a second battery level threshold, or a second data volume threshold. In the foregoing manner, the threshold is configured by the network device, thereby further improving flexibility of switching the working mode.

According to a ninth aspect, a communication method is provided. An execution body of the method may be a network device or a chip, a chip system, or a circuit in the network device. Using an example in which the execution body is the network device, the method may be implemented through the following steps: A network device receives a second message, where the second message is used to request to switch a working mode of a first terminal device, and the first terminal device has at least two working modes of an ambient IoT terminal device.

In a possible design, the working mode of the ambient IoT terminal device includes a first mode, a second mode, or a third mode, where the first mode and the second mode support reflective communication, the third mode supports active communication, and power consumption in the first mode is less than power consumption in the second mode.

In a possible design, the method further includes: sending, by the network device, at least one of the following: a second signal quality threshold, a second battery level threshold, or a second data volume threshold.

For some possible designs and beneficial effects of the ninth aspect, refer to the eighth aspect, and details are not described again.

According to a tenth aspect, this application further provides a communications apparatus, where the apparatus is a terminal device or a chip in a terminal device. The communications apparatus has a function of implementing any method provided in the first aspect, the second aspect, the sixth aspect, or the seventh aspect. The communications apparatus may be implemented by hardware, or may be implemented by hardware executing corresponding software. The hardware or the software includes one or more units or modules corresponding to the foregoing functions.

In a possible design, the communication apparatus includes a processor, where the processor is configured to support the communication apparatus in performing a corresponding function of the terminal device in the foregoing method. The communication apparatus may further include a memory, where the memory may be coupled to the processor, and the memory stores program instructions and data necessary for the communication apparatus. Optionally, the communication apparatus further includes an interface circuit, where the interface circuit is configured to support communication between the communication apparatus and a device such as a network device, for example, for receiving or sending data or signals. For example, the communication interface may be a transceiver, a circuit, a bus, a module, or a communication interface of another type.

In a possible design, the communication apparatus includes corresponding function modules, which are configured to implement the steps in the foregoing methods. The functions may be implemented by hardware, or may be implemented by hardware executing corresponding software. The hardware or software includes one or more modules corresponding to the foregoing functions.

In a possible design, a structure of the communication apparatus includes a processing unit and a communication unit. These units may perform corresponding functions in the foregoing method examples. For details, refer to the descriptions in the method provided in the first aspect, the second aspect, the sixth aspect, or the seventh aspect. Details are not described herein again.

According to an eleventh aspect, this application further provides a communication apparatus, where the apparatus is a network device or a chip in a network device. The communication apparatus has a function of implementing any method provided in the third aspect, the fourth aspect, the eighth aspect, or the ninth aspect. The communication apparatus may be implemented by hardware, or may be implemented by hardware executing corresponding software. The hardware or the software includes one or more units or modules corresponding to the foregoing functions.

In a possible design, the communication apparatus includes a processor, where the processor is configured to support the communication apparatus in performing a corresponding function of the network device in the foregoing methods. The communication apparatus may further include a memory, where the memory may be coupled to the processor, and the memory stores program instructions and data necessary for the communication apparatus. Optionally, the communication apparatus further includes an interface circuit, where the interface circuit is configured to support communication between the communication apparatus and devices such as a terminal device and a core network device, for example, for receiving or sending data or signals. For example, the communication interface may be a transceiver, a circuit, a bus, a module, or a communication interface of another type.

In a possible design, the communication apparatus includes corresponding function modules, which are respectively configured to implement the steps in the foregoing methods. The functions may be implemented by hardware, or may be implemented by hardware executing corresponding software. The hardware or software includes one or more modules corresponding to the foregoing functions.

In a possible design, a structure of the communication apparatus includes a processing unit and a communication unit, where these units may perform corresponding functions in the foregoing method examples. For details, refer to the descriptions in the method provided in the third aspect, the fourth aspect, the eighth aspect, or the ninth aspect. Details are not described herein again.

According to a twelfth aspect, this application further provides a communication apparatus, where the apparatus is a core network device or a chip in a core network device. The communication apparatus has a function of implementing any method provided in the fifth aspect. The communication apparatus may be implemented by hardware, or may be implemented by hardware executing corresponding software. The hardware or software includes one or more units or modules corresponding to the foregoing functions.

In a possible design, the communication apparatus includes a processor, where the processor is configured to support the communication apparatus in performing a corresponding function of the core network device in the foregoing method. The communication apparatus may further include a memory, where the memory may be coupled to the processor, and the memory stores program instructions and data necessary for the communication apparatus. Optionally, the communication apparatus further includes an interface circuit, where the interface circuit is configured to support communication between the communication apparatus and a device such as a network device, for example, for receiving or sending data or signals. For example, the communication interface may be a transceiver, a circuit, a bus, a module, or a communication interface of another type.

In a possible design, the communication apparatus includes corresponding function modules, which are configured to implement the steps in the foregoing methods. The functions may be implemented by hardware, or may be implemented by hardware executing corresponding software. The hardware or software includes one or more modules corresponding to the foregoing functions.

In a possible design, a structure of the communication apparatus includes a processing unit and a communication unit. These units may perform corresponding functions in the foregoing method examples. For details, refer to the descriptions in the method provided in the fifth aspect, and details are not described herein again.

According to a thirteenth aspect, a communication apparatus is provided, including a processor and an interface circuit. The interface circuit is configured to receive a signal from another communication apparatus outside the communication apparatus and transmit the signal to the processor, or send a signal from the processor to another communication apparatus outside the communication apparatus. The processor is configured to implement the method in the first aspect, the second aspect, the sixth aspect, the seventh aspect, or any possible design thereof by using a logic circuit or executing code instructions.

According to a fourteenth aspect, a communication apparatus is provided, including a processor and an interface circuit. The interface circuit is configured to receive a signal from another communication apparatus outside the communication apparatus and transmit the signal to the processor, or send a signal from the processor to another communication apparatus outside the communication apparatus. The processor is configured to implement the method in the third aspect, the fourth aspect, the eighth aspect, the ninth aspect, or any possible design thereof by using a logic circuit or executing code instructions.

According to a fifteenth aspect, a communication apparatus is provided, including a processor and an interface circuit. The interface circuit is configured to receive a signal from another communication apparatus outside the communication apparatus and transmit the signal to the processor, or send a signal from the processor to another communication apparatus outside the communication apparatus. The processor is configured to implement the method in the fifth aspect or any possible design thereof by using a logic circuit or executing code instructions.

According to a sixteenth aspect, a computer-readable storage medium is provided. The computer-readable storage medium stores a computer program or instructions, and when the computer program or the instructions is/are executed by a processor, the method in any one of the first aspect to the ninth aspect and any possible design thereof is implemented.

According to a seventeenth aspect, a computer program product storing an instruction is provided. When the instruction is run by a processor, the method in any one of the first aspect to the ninth aspect and any possible design thereof is implemented.

According to an eighteenth aspect, a chip system is provided. The chip system includes a processor, and may further include a memory, configured to implement the method in any one of the first aspect to the ninth aspect and any possible design thereof. The chip system may include a chip, or may include the chip and another discrete component.

According to a nineteenth aspect, a communications system is provided. The system includes the apparatus (for example, a terminal device) according to the first aspect and the apparatus (for example, a network device) according to the third aspect.

According to a twentieth aspect, a communications system is provided, where the system includes the apparatus (for example, a terminal device) according to the second aspect and the apparatus (for example, a network device) according to the fourth aspect.

According to a twenty-first aspect, a communications system is provided, where the system includes a terminal device, a network device, and a core network device, where the terminal device sends indication information to the core network device by using the network device, where the indication information indicates an operating mode of the terminal device, and the terminal device has at least two operating modes of an environmental Internet of Things terminal device. After receiving the indication information, the core network device indicates the operating mode of the terminal device to the network device.

According to a twenty-second aspect, a communications system is provided, where the system includes the apparatus (for example, a terminal device) according to the sixth aspect and the apparatus (for example, a network device) according to the eighth aspect.

According to a twenty-third aspect, a communications system is provided, where the system includes the apparatus (for example, a terminal device) according to the seventh aspect and the apparatus (for example, a network device) according to the ninth aspect.

According to a twenty-fourth aspect, a communications system is provided, where the system includes a first terminal device and a network device, where the network device sends a paging message, where the paging message is used to page a first-type terminal device, and the first-type terminal device has at least two working modes of an ambient IoT terminal device; and if the first terminal device has at least two working modes of the ambient IoT terminal device, the first terminal device sends a random access request.

According to a twenty-fifth aspect, a communications system is provided, where the system includes a first terminal device and a network device, where the first terminal device sends first indication information to the network device, where the first indication information indicates a working mode supported by the first terminal device, and the first terminal device has at least two working modes of an ambient IoT terminal device.

According to a twenty-sixth aspect, a communications system is provided, where the system includes a first terminal device and a network device, where the first terminal device sends first indication information to a core network device, where the first indication information indicates a working mode supported by the first terminal device, and the first terminal device has at least two working modes of an ambient IoT terminal device; and where the core network device sends second indication information to the network device, where the second indication information indicates a working mode supported by the first terminal device.

According to a twenty-seventh aspect, a communications system is provided, where the system includes a first terminal device and a network device, where the network device sends a first message, where the first message is used to indicate switching of an operating mode of the first terminal device, and the first terminal device has at least two operating modes of an ambient IoT terminal device.

According to a twenty-eighth aspect, a communications system is provided, where the system includes a first terminal device and a network device, where the first terminal device determines, based on at least one of the following items, switching of an operating mode of the terminal device: fourth information, fifth information, sixth information, or a service type, where the fourth information includes reference signal quality and a second signal quality threshold, the fifth information includes a battery level and a second battery level threshold, the sixth information includes a data volume and a second data volume threshold, and the first terminal device has at least two operating modes of an ambient IoT terminal device; and the first terminal device sends a second message to the network device, where the second message is used to request switching of an operating mode.

For technical effects that can be achieved by the technical solutions according to any one of the tenth aspect to the twenty-third aspect, refer to the descriptions of the technical effects that can be achieved by the technical solutions according to the first aspect to the ninth aspect. Repeated parts are not described again.

### BRIEF DESCRIPTION OF THE DRAWINGS

FIG. 1 is a schematic architectural diagram of a communications system according to an embodiment of this application;
FIG. 2 is a schematic architectural diagram of another communications system according to an embodiment of this application;
FIG. 3 is a schematic diagram of a first mode of UE and a second mode of UE for sending data according to an embodiment of this application;
FIG. 4 is a schematic diagram of data transmission by UE in a third mode according to an embodiment of this application;
FIG. 5 is a schematic flowchart of a communication method according to an embodiment of this application;
FIG. 6 is a schematic flowchart of a communication method according to an embodiment of this application;
FIG. 7 is a schematic diagram of reporting a working mode according to an embodiment of this application;
FIG. 8 is a schematic diagram of reporting a working mode according to an embodiment of this application;
FIG. 9 is a schematic flowchart of a procedure for switching a working mode according to an embodiment of this application;
FIG. 10 is a schematic flowchart of a procedure for switching a working mode according to an embodiment of this application;
FIG. 11 is a schematic structural diagram of a communications apparatus according to an embodiment of this application;
FIG. 12 is a schematic structural diagram of a communications apparatus according to an embodiment of this application.

### Detailed Description

Embodiments of this application provide a communication method, which may be used for communication of an Internet of Things (internet of things, IoT) terminal. The IoT includes an ambient Internet of Things (ambient IoT, A-IoT), a narrowband Internet of Things (narrow band internet of things, NB-IoT), and the like. The IoT technology is widely applied to various industry fields. For example, the IoT technology may be applied to scenarios such as logistics, warehousing, industrial manufacturing, identity recognition, or environmental monitoring, or agriculture, animal husbandry, and forestry. For example, as a typical application, logistics management implements logistics management by performing inventory on a tag on an object. Inventory on a tag means that a reader/writer performs an inventory operation on some tags within a coverage area of the reader/writer, to obtain identifiers of the tags within the coverage area of the reader/writer.

The IoT is implemented based on a radio frequency identification (radio frequency identification, RFID) technology. The RFID technology is a non-contact communication technology that is implemented by using a radio frequency communication manner. A principle of the RFID technology is that a reader/writer (reader) and a tag (tag) do not need to contact each other, and data communication is implemented through radio waves.

The technical solutions provided in the embodiments of this application may be applied to an IoT system, such as an A-IoT system; or may be applied to a communication system related to the 3rd Generation Partnership Project (3rd generation partnership project, 3GPP), such as a Long Term Evolution (long term evolution, LTE) communication system, a fifth generation (5th generation, 5G) mobile communication system, or may be applied to other next-generation mobile communication systems, such as a sixth generation (6G) communication system, or other similar communication systems. Other similar communication systems may include Wireless Fidelity (wireless fidelity, Wi-Fi), Vehicle to Everything (V2X), and so on.

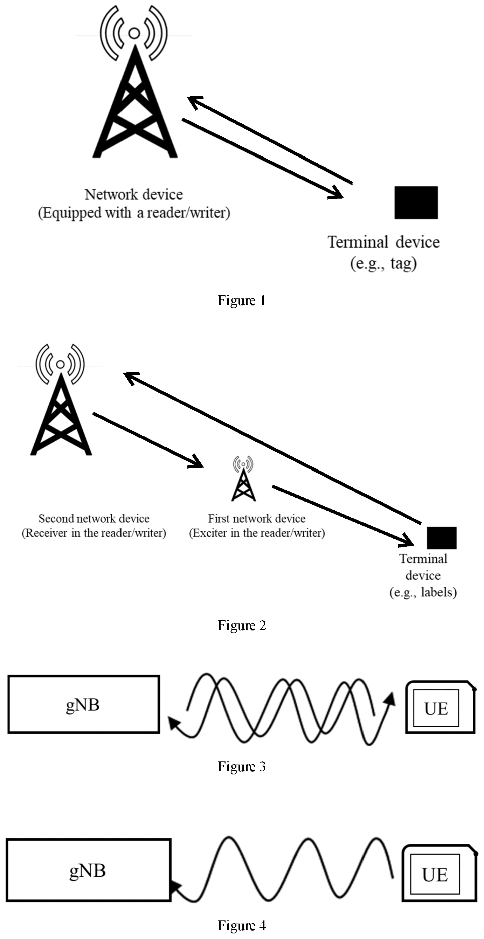

Referring to FIG. 1, it is a schematic diagram of a communication system according to an embodiment of this application. The communication system includes at least one terminal device and at least one network device. FIG. 1 uses an example in which the communication system includes one terminal device and one network device. The network architecture shown in FIG. 1 is merely an example, and the number of terminal devices and/or network devices may be less or more. Optionally, the communication system in this application may further include a core network device, for example, an access and mobility management function (access and mobility management function, AMF) network element and an application function (application function, AF) network element. It should be understood that the communication system may further include other core network devices, which are not limited herein.

The communication system described in the embodiments of this application is intended to provide a clearer illustration of the technical solutions in the embodiments of this application, and does not constitute a limitation on the communication system to which the embodiments of this application are applicable. A person of ordinary skill in the art may understand that, with the evolution of network architectures, the technical solutions provided in the embodiments of this application are also applicable to similar technical problems. When applying the technical solutions of the embodiments of this application to other communication systems, the devices, components, modules, and the like in the embodiments may be replaced with corresponding devices, components, modules, and the like in other communication systems, without any limitation.

Any device capable of data communication with a network device may be considered as a terminal device. A terminal device is also referred to as a terminal, terminal apparatus, user equipment (user equipment, UE), mobile station, or mobile terminal, among others. For example, the terminal device may be a mobile phone, a computer, a mobile internet device (mobile internet device, MID), a wearable device, a virtual reality (virtual reality, VR) device, an augmented reality (augmented reality, AR) device, a robotic arm, a camera, a robot, or a smart home device (such as a television, an air conditioner, a floor sweeping robot, a sound box, or a set-top box), a relay (relay), a customer-premises equipment (CPE), or a device with the functions of a tag device. For instance, the terminal device may be a tag in IoT/A-IoT. FIG. 1 uses an example in which the terminal device is an A-IoT terminal. For ease of description, the following provides a detailed description using a terminal as an example.

A tag can be referred to as an RFID tag or an electronic tag, or alternatively as an A-IoT terminal, an A-IoT device, or simply a device, which is generally attached to an object to identify the target object. The tag can receive RF signals from a reader/writer, and by utilizing the energy obtained from the induced current, the tag can transmit information stored in the chip inside the tag. Alternatively, the tag can actively send a signal of a certain frequency to the reader/writer, which then reads the information from the tag. The design of the tag is relatively simple, integrating application layer signaling and air interface signaling into one, and it features low power consumption.

Both the tag device and the reader/writer can be implemented based on the infrastructure within a cellular network, or the tag device and the reader/writer can be devices within the cellular network. For example, the functionality of the reader/writer can be realized by a network device or a terminal, while the tag device can be realized by a terminal within the cellular network, such as an Internet of Things (IoT) terminal with extremely low power consumption and complexity. When a terminal has the functionality of a tag device, non-contact data communication can be conducted between that terminal and a network device or another terminal.

The various terminals described above, if located on a vehicle (for example, placed/installed inside the vehicle), may be considered as vehicle-mounted terminals. The vehicle-mounted terminal may be built into an in-vehicle module, an in-vehicle assembly, an in-vehicle component, an in-vehicle chip, or an on-board unit (OBU) of the vehicle as one or more components or units. The vehicle-mounted terminal may also be an entire vehicle device, an in-vehicle module, a vehicle, an on-board unit (OBU), a roadside unit (RSU), an in-vehicle infotainment system (or referred to as an in-vehicle sending unit) (telematics box, T-box), a chip, a system on chip (SOC), or the like. The chip or the SOC may be installed in a vehicle, an OBU, an RSU, or a T-box.

In the embodiments of this application, an apparatus configured to implement a function of the terminal may be the terminal itself, or may be an apparatus that can support the terminal in implementing the function, for example, a chip system or a combined component or part that can implement the function of the terminal. The apparatus may be installed in the terminal. A specific technology and a specific device form used by the terminal are not limited in embodiments of this application. For example, in embodiments of this application, the terminal may be in a tag form, or may be in another terminal form.

The network device involved in the embodiments of this application is mainly an access network device. Therefore, unless otherwise specified, the "network device" mentioned hereinafter refers to a radio access network (RAN) device, which may be briefly referred to as an access network device. The RAN may be a 3GPP-related cellular system, for example, an LTE system, a new radio (new radio, NR) system, or a future-oriented evolved system (for example, a 6G mobile communications system). The RAN may also be an open radio access network (open RAN, O-RAN, or ORAN), a cloud radio access network (cloud radio access network, CRAN), a virtualized radio access network (virtualized RAN, vRAN), or the like. The RAN may also be a communications system formed by a combination of two or more of the foregoing systems. The RAN device may also be referred to as a RAN node, a RAN entity, an access node, or the like. For example, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation NodeB in a 6G mobile communications system, a base station in a future mobile communications system, or the like. The RAN node may be an RAN node in the V2X technology, or may be an access node in an RSU, a Wi-Fi system, or the like.

The RAN node may also be a module or a unit that implements some functions of the base station. Alternatively, a plurality of RAN nodes cooperate to assist the terminal in implementing radio access, and different RAN nodes separately implement some functions of the base station. For example, the RAN node may be a central unit (central unit, CU), a distributed unit (distributed unit, DU), a radio unit (radio unit, RU), or the like. In different systems, the CU, the DU, or the RU may have different names, but a person skilled in the art may understand the meanings thereof. For example, in the ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, a CU, a CU-CP, a CU-UP, a DU, and an RU are used as examples for description in this application. The CU and the DU may be configured based on protocol layer functions of the wireless network implemented by the CU and the DU. Which protocol layers are separately configured for the CU and the DU is not limited in this embodiment of this application. Any one of the CU, the DU, and the RU in this application may be implemented by using a software module, a hardware module, or a combination of a software module and a hardware module.

In the embodiments of this application, the network device may have a built-in reader/writer. When the terminal is a tag, the tag and the network device may communicate with each other through a Uu interface, as shown in FIG. 1. Functions of the reader/writer may be further separated, and the reader/writer is divided into a receiver (receiver) and an exciter (helper). The receiver is also referred to as a receive end or a receive unit, and the exciter is also referred to as an excitation end or an excitation unit. The excitation unit is equivalent to a transmitter in the reader/writer, and the receive unit is equivalent to a receiver in the reader/writer. When the reader/writer is implemented in a separated architecture, different entities of the reader/writer may be deployed on different network devices, as shown in FIG. 2. In FIG. 2, an exciter is deployed on a first network device, configured to perform a sending function of the reader/writer; and a receiver is deployed on a second network device, configured to perform a receiving function of the reader/writer.

In the embodiments of this application, an apparatus configured to implement a function of the network device may be the network device itself, or may be an apparatus that can support the network device in implementing the function, for example, a chip system or a combined component or part that can implement a function of the network device. The apparatus may be installed in the network device. A specific technology and a specific device form used by the network device are not limited in embodiments of this application.

In embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, or only B exists, where A and B may be singular or plural. The character "/" generally indicates an "or" relationship between the associated objects. "At least one of the following items (pieces)" or a similar expression thereof means any combination of these items, including any combination of a single item (piece) or a plurality of items (pieces). For example, "at least one of a, b, or c" may indicate: a, b, c, a and b, a and c, b and c, or a, b, and c, where a, b, and c may be singular or plural.

In addition, unless otherwise stated, ordinal numbers such as "first" and "second" mentioned in embodiments of this application are used to distinguish between a plurality of objects, and are not intended to limit a size, content, sequence, time sequence, priority, or importance degree of the plurality of objects. For example, "first information" and "second information" are merely used to distinguish between different information, but do not indicate different priorities or importance degrees of the two pieces of information.

It should be noted that in this application, terms such as "example" or "for example" are used to indicate an example, an illustration, or a description. Any embodiment or design described as "example" or "for example" in this application should not be construed as being more preferred or having more advantages than other embodiments or designs. To be precise, the use of the terms such as "example" or "for example" is intended to present a related concept in a specific manner.

The terms "include" and "have" and any other variants thereof mentioned in the embodiments of this application, as used in the following description, are intended to cover non-exclusive inclusion. For example, a process, method, system, product, or device that includes a series of steps or units is not limited to those listed steps or units, but may optionally further include other steps or units that are not listed, or optionally further include other inherent steps or units of these processes, methods, products, or devices.

The ambient IoT terminal may be of the following three types: a passive terminal: a device without energy storage and without independent signal generation, for example, a device with a backscatter transmission feature, such as device A; a semi-passive terminal: a device with energy storage but without independent signal generation, for example, a device with a backscatter transmission feature, such as device B, where the use of stored energy may include amplification of a reflected signal; and an active terminal: a device with energy storage and with independent signal generation, for example, an active radio frequency (RF) component for transmission, such as device C.

The capabilities (for example, the capability of device C is higher than that of device A and device B), power consumption requirements (for example, the power consumption of device C > the power consumption of device B > the power consumption of device A), costs (for example, the cost of device C > the cost of device B > the cost of device A), hardware complexity (for example, the hardware complexity of device C is higher than that of device A and device B), service requirements (for example, device A and device B mainly perform a inventory service, while device C can support more services such as sensing and reporting), and many other factors of the three types of terminals are different. Therefore, the communication manners of the three types of terminals are different.

For example, for device A and device B, a large frequency offset of an internal crystal oscillator may cause an inability to accurately synchronize with network time, so an access procedure is asynchronous access. However, for device C, the crystal oscillator can achieve synchronization with network time, so an access procedure may be synchronous access. In addition, there are some other differences. For example, considering complexity and power consumption differences, device C may support some complex procedures, such as measurement, and can support both mobile originated (MO) and mobile terminated (MT) services, while device A and device B do not support complex measurement (or may support simplified measurement), for example, device A and device B may support only the MT service. Alternatively, device C supports system information, while device A and device B do not support system information.

Currently, the communication protocol studies device C separately from device A/device B. Since device A and device B have most functions and service types that are similar, they are usually studied together. Therefore, the protocol procedure and technical solution may vary according to different devices. However, a terminal may integrate two capabilities/communication modes of device C, device A, and device B at the same time, that is, the terminal may have capabilities of both a passive device and an active device, while this is not considered in the existing related process design. Therefore, when a terminal integrates two or more capabilities, how to communicate with a network device becomes an urgent problem to be resolved.

Based on this, embodiments of this application provide a communication method and apparatus. The method and the apparatus are based on a same concept. Because the method and the apparatus have similar principles for resolving the problem, for implementation of the apparatus and the method, reference may be made to each other, and repeated parts are not described in detail.

The communication method provided in the embodiments of this application is particularly applicable to communication of an A-IoT terminal (for example, a tag), and certainly is also applicable to communication of another type of terminal.

The following describes the communication method provided in the embodiments of this application with reference to the accompanying drawings.

For ease of understanding, some terms in embodiments of this application are explained and described to facilitate understanding by a person skilled in the art.
1. Slotted aloha manner: In the slotted aloha manner, a time domain resource is divided into a plurality of discrete timeslots, where a length of each timeslot is equal to or greater than one frame, and a tag can transmit data only at the beginning of the timeslot. A timeslot used to transmit data is controlled by a reader/writer, and a tag can use these timeslots to transmit data only after the reader/writer allocates all timeslots.
2. Active communication capability: An ability to directly send a signal without depending on an energy signal, for example, an ability to generate a carrier to send a signal, or an ability to actively send a signal without depending on an external carrier or energy.
3. Reflective communication capability: An ability to reflect a signal by depending on an energy signal. Optionally, when a signal is reflected, an energy signal may reach a specific threshold. In this embodiment of this application, the "working mode" may also be alternatively described as a "communication mode," "working manner," "communication manner," "working type," "communication type," "communication capability," or the like.
4. A working mode of the ambient IoT terminal in this application may include, but is not limited to, a first mode, a second mode, or a third mode.

For example, the first mode, the second mode, or the third mode may further have at least one of the following differences:
(1) Power consumption of the UE in the first mode < power consumption of the UE in the second mode < power consumption of the UE in the third mode. For example, the power consumption of the UE in the first mode is at a microwatt level, the power consumption of the UE in the second mode is at a hundred-microwatt level, and the power consumption of the UE in the third mode is at a ten-milliwatt level.
(2) In the first mode and the second mode, the UE sends data based on a continuous wave sent by the network device (illustrated as a gNB in FIG. 3 and FIG. 4), as shown in FIG. 3. In the third mode, the UE may generate a carrier wave to send data, as shown in FIG. 4.
(3) A transmission rate of the UE in the first mode < a transmission rate of the UE in the second mode < a transmission rate of the UE in the third mode.
4) In the first mode and the second mode, the UE supports asynchronous slotted Aloha access; in the third mode, the UE supports synchronous random access.
5) In the first mode, the UE does not support system information, and in the second mode, the UE does not support system information; in the third mode, the UE supports system information.
6) In the first mode, the UE does not support measurement, and in the second mode, the UE does not support measurement; in the third mode, the UE supports measurement.
7) In the first mode, the UE supports reflective communication, and in the second mode, the UE supports reflective communication; in the third mode, the UE supports active communication.
8) In the first mode, the UE does not support energy storage, while in the second mode and the third mode, the UE supports energy storage.

For example, the first mode may correspond to the working mode of the device A described in the foregoing background, the second mode may correspond to the working mode of the device B described in the foregoing background, and the third mode may correspond to the working mode of the device C described in the foregoing background.

It may be understood that the first mode, the second mode, or the third mode may further have other differences, which are not listed one by one herein. It should be noted that the first mode and the second mode may also be defined as one mode, and the third mode may be defined as another mode.

In the embodiments of this application, the "working mode" may also be described as a "mode," "working manner," "manner," "communication mode," "communication manner," or the like.

The Select signaling may be used to page the device A/device B, or may be used to page the device C. This is not specifically limited herein. The Select signaling may include mask information, where the mask information is used to filter a terminal. For example, a mask carried by the Select signaling is "0000" of 4 bits, and a mask of a terminal (for example, terminal A) is "00001111." Because the first four bits in "00001111" are the mask carried by the Select signaling, the terminal A meets the selection range of the Select signaling, and the terminal A may respond to the Select signaling. Alternatively, the Select signaling may carry an identifier/group identifier of a terminal. For example, the Select signaling includes a filter, where the filter is used to filter a terminal to be paged. The filter may be an identifier/group identifier of a terminal, and is used to page a certain terminal or a group of terminals; or the filter may indicate a type of terminal, that is, is used to page a certain type of terminal. It may be understood that the filter is used to filter a terminal, and the filter may also be referred to as filtering information. A specific name of the filter is not limited in this embodiment of this application.

The paging message may be used to page device C.

6. The query signaling may be used to trigger the start of the inventory process, or may be used to indicate a time/timeslot resource used for random access. In a specific example, the query signaling is used to determine a quantity of access resources to be allocated, where the access resources are used to receive access information. For example, if eight access resources are allocated, after receiving the query signaling, the terminal may randomly select one of the access resources, and initiate access/send a random access request/send uplink data on the access resource.

The naming of each message/signaling in this application is merely an example, and this application does not limit a specific name of each message/signaling, provided that a function/limitation/meaning/description of the message can be met, the message may be understood as such. For example, the paging message and the Select signaling are merely example names of the paging message, and any name that can meet a function/limitation/meaning/description of the paging message in this application may be understood as the paging message in this application. In the embodiments of this application, "electricity" may also be described as "energy," "capacitor energy storage," "battery energy storage," or the like.

The following provides an example of how the communication method provided in the embodiments of this application is performed by a core network device, a network device, and a terminal. The steps performed by the network device may be implemented by the RAN device itself, or may be implemented by a component (such as a baseband processor, or other processing units or processor modules) within the RAN device. For example, the network device may be the network device in FIG. 1, or may be a chip (system) in the network device in FIG. 1. The steps performed by the terminal may be implemented by the terminal itself, or may be implemented by a component (such as a chip, a processing unit, or a processor module) within the terminal. The terminal may be the terminal shown in FIG. 1, or may be a chip (system) in the terminal in FIG. 1. The terminal may be UE, or may be an A-IoT terminal, for example, the terminal may be a tag. The steps performed by the core network device may be implemented by the core network device itself, or may be implemented by a component (such as a chip, or other processing units or processor modules) within the core network device. The following uses an example in which the core network device is an AMF network element for illustration. It should be noted that actions performed by the AMF network element may also be performed by another network element, for example, a network element configured to manage tags. The network element configured to manage tags may be referred to as a tag management function (tag management function, TMF) network element, or may be referred to as something else, which is not specifically limited herein.

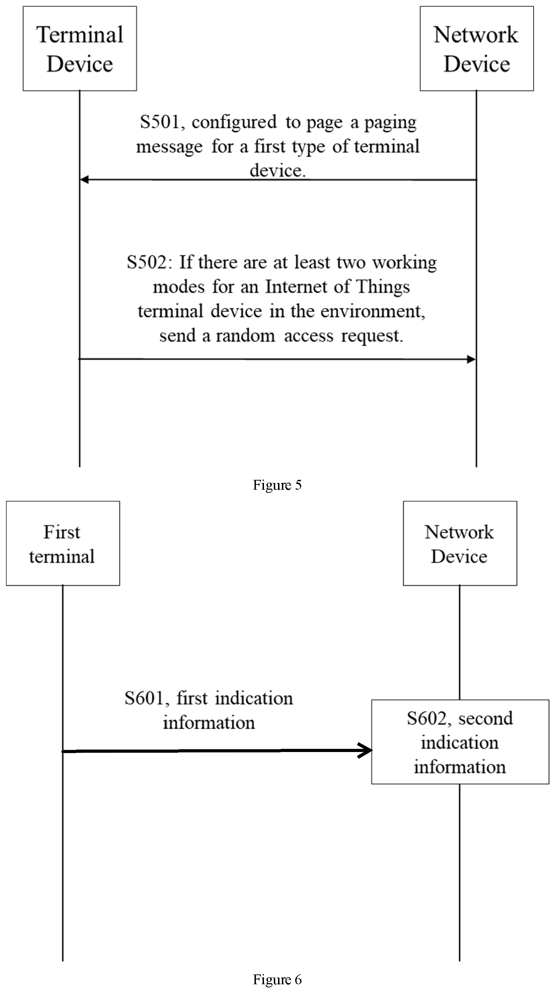

Please refer to FIG. 5, which shows a schematic flowchart of a communication method according to an embodiment of this application. The method is used by a network device to obtain an operating mode of a terminal.

S501: A network device sends a paging message. Correspondingly, the first terminal receives the paging message.

The paging message is used to page a first-type terminal, and the first-type terminal has at least two operating modes of an ambient IoT terminal. For a detailed description of the operating mode of the ambient IoT terminal, refer to the related descriptions in the foregoing background. Details are not described herein again.

In a possible implementation, the first-type terminal may be paged by the paging message in the following manner: The first-type terminal may be paged by the paging message in a manner of carrying a specific identifier/a specific bit field/a specific field/a specific value of a field/a specific bit field filling, or the like, where the specific identifier, the specific bit field, the specific field, the specific value of the field, the specific bit field filling, or the like is used to indicate that the first-type terminal is a terminal having two or more operating modes of an ambient IoT terminal. In this manner, if the first terminal supports at least two operating modes of an ambient IoT terminal, the first terminal may be understood as a first-type terminal.

Furthermore, the paging message may further indicate a working mode that needs to be supported by the first-type terminal. For example, the paging message may indicate that the first-type terminal needs to support the first mode and the third mode, or the second mode and the third mode, or the first-type terminal needs to support the first mode, the second mode, and the third mode, or the first-type terminal needs to support the first mode and the second mode. Alternatively, the paging message may indicate that the first-type terminal has a reflective communication capability, or has both a reflective communication capability and an active communication capability. In this manner, if the first terminal supports at least two working modes of the ambient IoT terminal, and the working mode supported is the working mode indicated by the paging message, the first terminal may be understood as the first-type terminal.

For example, the paging message may indicate, by using two fields, that the terminal to be paged needs to have at least two working modes of the ambient IoT terminal and indicate a working mode of the terminal to be paged. For example, a field 1 in the paging message indicates that the terminal to be paged (that is, the first-type terminal) needs to have at least two working modes of the ambient IoT terminal, and a field 2 in the paging message indicates a working mode of the terminal to be paged (that is, the first-type terminal).

In another possible implementation, the first-type terminal may be paged by the paging message in the following manner: The paging message may page the first-type terminal by indicating a working mode that the first-type terminal needs to support. For example, the paging message may indicate that the first-type terminal needs to support the first mode and the third mode, or the second mode and the third mode, or the first-type terminal needs to support the first mode, the second mode, and the third mode, or the first-type terminal needs to support the first mode and the second mode. Alternatively, the paging message may indicate that the first-type terminal has a reflective communication capability, or has both a reflective communication capability and an active communication capability. In this manner, if the first terminal supports the working mode indicated by the paging message, the first terminal may be understood as the first-type terminal.

For example, the paging message may indicate the working mode of the first-type terminal by using one field. For example, the field 3 in the paging message indicates at least two working modes, indicating that the first-type terminal is a terminal having the working mode indicated by the field 3. This manner implicitly indicates that the first-type terminal needs to have at least two working modes of an ambient IoT terminal.

Optionally, the paging message may carry a user identifier (for example, a 5G-UE temporary mobile subscriber identity (temporary mobile subscriber identity, TMSI) or an S-TMSI), a group identifier (for example, a TMGI), or a mask (mask) to indicate the user identifier, the group identifier, or the mask. Based on this, after receiving the paging message, the first terminal may match the user identifier, the group identifier, the mask, or the like.

As a possible application scenario, if the network device does not know the current working mode of the first terminal, for example, the first terminal switches the working mode but does not report the working mode to the network device, or for example, the first terminal does not report an initial working mode to the network device after power-on, in these scenarios, S501 may be implemented in any one of the following three manners:
Manner 1: The network device may first page the terminal by using a paging message (for example, a paging message) for paging the device C. If the terminal cannot be paged (for example, a quantity of times for sending the paging message reaches a threshold) or a paging time reaches a threshold, the network device may page the terminal by using a paging message (for example, Select signaling) for paging the device A or B.

The aforementioned method allows for paging a terminal operating in the third mode through a paging message intended for device C, and for paging a terminal operating in the first mode/second mode through a paging message intended for device A/B. By employing two paging stages, this method enables the network device to page the terminal even without knowing the terminal's current operating mode, thereby improving the success rate of paging.

Method 2: The network device may page the terminal through a paging message (e.g., Select signaling) intended for device A/B. If the terminal cannot be paged (e.g., the number of times paging messages are sent reaches a threshold) or if the paging time reaches a threshold, the network device may instruct the first terminal to switch its operating mode to the first mode/second mode. Furthermore, the network device may continue to page the terminal through paging messages intended for device A/B.

Optionally, the network device may indicate the first terminal to switch the operating mode to the first mode/second mode under the trigger of the AMF network element.

The aforementioned method enables a terminal operating in the first mode/second mode to be paged through a paging message for the device A/B, and by instructing the terminal to switch to the first mode/second mode, ensures that a terminal operating in the third mode can also be paged. This allows the network device to page the terminal even without knowing the current operating mode of the terminal, thereby improving the success rate of paging.

Method 3: The network device may page the terminal simultaneously through a paging message for device A/B and a paging message for device C. Alternatively, the network device may page the terminal jointly through a paging message for device A/B and a paging message for device C.

Optionally, the network device may page the terminal through a paging message for device A/B and a paging message for device C when triggered by the AMF network element. Alternatively, the network device may page the terminal jointly through a paging message for device A/B and a paging message for device C when triggered by the AMF network element.

The foregoing manner enables the network device to page the terminal while using two types of paging messages at the same time, so that the network device can page the terminal even when the network device does not know the current working mode of the terminal, thereby improving a paging success rate.

Manner 4: The network device may page the terminal by using a paging message that can page the device A, the device B, and the device C.

In this manner, a paging message is designed to page the device A, the device B, and the device C at the same time, so that the network device can page the terminal working in the first mode, the second mode, or the third mode by using one paging message, thereby enabling the network device to page the terminal even when the network device does not know the current working mode of the terminal, thereby improving a paging success rate.

Optionally, if the first-type terminal is a terminal in the first mode and/or the second mode, after sending the paging message, the network device may further send query signaling. The query signaling is a device A, a device B, or a passive/semi-passive tag, and is used for asynchronous transmission, and indicates a time resource allocated to the terminal for access. Further, after sending the query signaling, the network device may further send some signaling for triggering access of the first terminal, for example, QueryRep signaling, which is used to trigger a random access occasion of the first terminal.

If the first-type terminal is a terminal in the third mode, after sending the paging message, the network device may not send query signaling.

S502: If the first terminal has at least two working modes of the ambient IoT terminal, the first terminal sends a random access request. Correspondingly, the network device receives the random access request.

Specifically, that the first terminal has at least two working modes of the ambient IoT terminal may also be understood as that the first terminal belongs to the first-type terminal.

Optionally, if the paging message indicates a working mode that needs to be supported by the first-type terminal, before sending the random access request, the first terminal may further determine that the first terminal has the working mode indicated by the paging message.

In a possible implementation, if the paging message pages the first-type terminal device but does not indicate a working mode that needs to be supported by the first-type terminal, after receiving the paging message, the first terminal may further send information A to the network device, where the information A is used to indicate a working mode supported by the first terminal. For example, the first terminal may send the information A by using the random access request.

In a possible implementation, if the first terminal operates in the third mode, the first terminal may further send a preamble before sending the random access request.

Optionally, after receiving the random access request, the network device may send, to the first terminal, a message used to acknowledge or allow the terminal to perform random access. For example, the message may be a random access response or a contention resolution identifier.

Further, after the random access succeeds (for example, after receiving the random access response), the first terminal may perform data transmission with the network device, for example, send uplink data to the network device, and/or receive downlink data from the network device.

In a possible implementation, step S502 may be replaced with the following: If the first terminal has at least two working modes of an ambient IoT terminal, the first terminal responds to the paging message. For example, a radio resource control (radio resource control, RRC) layer of the first terminal may forward the identifier in the paging message to an upper layer.

In another possible implementation, step S502 may alternatively be replaced with: if the first terminal has at least two working modes of an ambient IoT terminal, the terminal sends uplink data. For example, this manner may be applied to a single-user random access channel (random access channel, RACH) procedure scenario. After receiving a paging message or another downlink trigger message, the first terminal may skip the RACH procedure and directly send uplink data. Alternatively, this manner may also be used to carry uplink data in a random access request, for example, short data transmission (small data transmission, SDT).

The foregoing describes that the network device may obtain the working mode supported by the first terminal, that is, the capability of the first terminal. In specific implementation, after obtaining the working mode supported by the first terminal, the network device may further obtain a working mode currently used by the first terminal.

In an implementation, the first terminal may use a default mode (for example, the third mode or the like) after initiating random access, so that the network device may determine, after the first terminal initiates random access, that the working mode of the first terminal is the default mode. For example, assuming that the default mode is the third mode, the first terminal may use the third mode after initiating random access, so that the network device may determine, after the first terminal initiates random access, that the working mode of the first terminal is the third mode. In this manner, the communication behavior of the first terminal and the network device can be aligned.

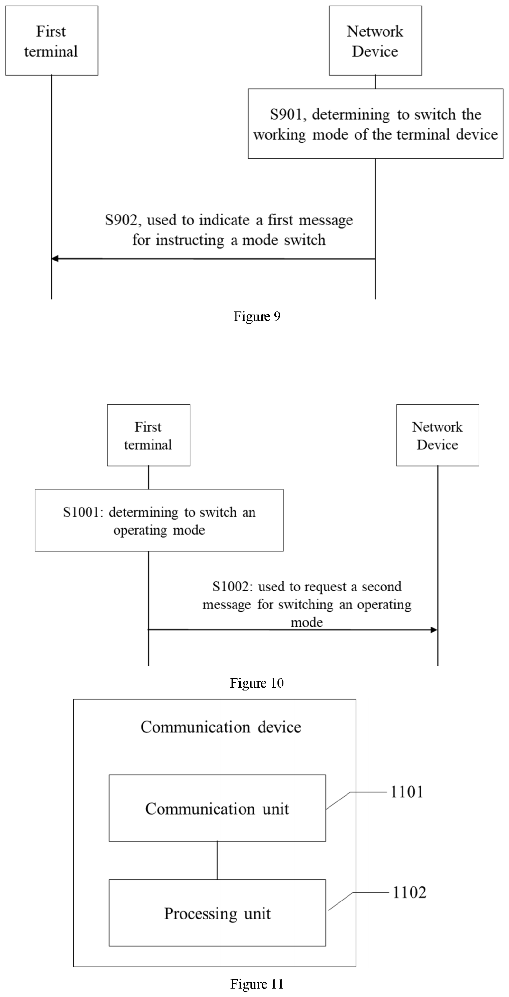

Optionally, after the first terminal initiates random access, the network device may further indicate, to the first terminal that has multiple working modes, to switch the working mode according to a requirement. Alternatively, the first terminal that has multiple working modes may also request, from the network device according to a requirement, to switch the working mode. A specific switching method will be described in the following related descriptions of FIG. 9 and FIG. 10.

This application considers introducing a terminal device with at least two working modes, where an Internet of Things (IoT) terminal device is included in the environment. Since the research on different working modes is independent of each other and the communication methods are different, the network device indicates the type of the paged terminal (i.e., the terminal device with dual-mode (or multi-mode)) in the paging message, so that the network device can obtain the capability of the first terminal (i.e., obtain the working mode supported by the first terminal), thereby enabling the network device to flexibly switch the working mode of the first terminal. This helps the network device to align the communication method with the terminal device, thereby improving communication performance.

The foregoing describes a method for a network device to obtain an operating mode of a terminal. In this method, the network device pages a terminal having a plurality of operating modes, and can obtain an operating mode of the paged terminal. The following describes another method for a network device to obtain an operating mode of a terminal. In this method, a first terminal may actively report an operating mode of the first terminal, so that the network device can obtain an operating mode of the paged first terminal. As shown in FIG. 6, the method includes the following steps:
S601: A first terminal sends first indication information.

The first indication information indicates an operating mode (or a communication capability) supported by the first terminal, where the first terminal has at least two operating modes of an ambient IoT terminal. For details about the operating mode of the ambient IoT terminal, refer to the related descriptions in the foregoing background, and details are not described herein again.

For example, the first indication information may indicate the first mode and the third mode, or the second mode and the third mode, or indicate that the first mode, the second mode, and the third mode are supported, or may indicate that the first mode and the second mode are supported. Alternatively, the first indication information may indicate that the terminal has a reflective communication capability, or has a reflective communication capability and an active communication capability.

As an example, the first indication information may directly indicate a working mode (or a communication capability) supported by the first terminal. For example, when the first indication information is 000, the first mode is indicated; when the first indication information is 001, the second mode is indicated; when the first indication information is 010, the third mode is indicated; when the first indication information is 011, the first mode and the second mode are indicated; when the first indication information is 100, the first mode and the third mode are indicated; when the first indication information is 101, the second mode and the third mode are indicated; when the first indication information is 110, the first mode, the second mode, and the third mode are indicated; and so on. In another example, when the first indication information is 000, device A is indicated; when the first indication information is 001, device B is indicated; when the first indication information is 010, device C is indicated; when the first indication information is 011, device A and device B are indicated; when the first indication information is 100, device A and device C are indicated; when the first indication information is 101, device B and device C are indicated; when the first indication information is 110, device A, device B, and device C are indicated; and so on.

It should be understood that the foregoing examples are merely examples for description, and this application does not limit the correspondence between the bit quantity of the first indication information and the state and working mode, or the like.

S602. The network device receives second indication information.

The second indication information indicates a working mode (or a communication capability) supported by the first terminal. A form of the second indication information will be described below with reference to specific implementations of S601 and S602.

In this application, the first terminal reports the working mode of the first terminal, so that the network device can obtain the capability of the first terminal, so that the network device is capable of flexibly switching the working mode of the first terminal, or communicating with the first terminal based on the working mode of the first terminal, for example, paging the first terminal based on the working mode of the first terminal.

The following describes two specific implementations of S601 and S602.

### Implementation 1:

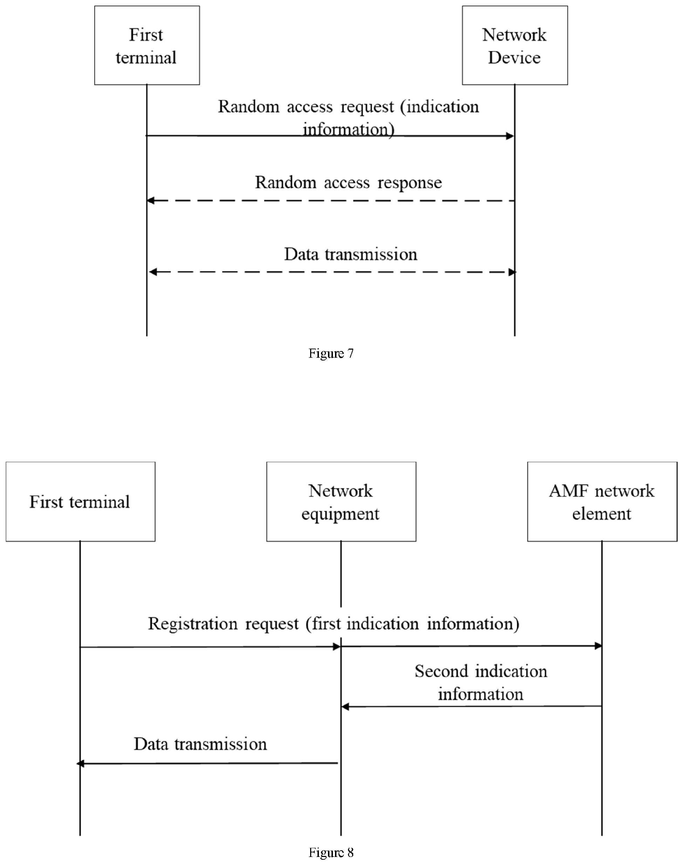

The first terminal may send the first indication information to the network device. In this implementation, the first indication information is the same as the second indication information. For example, as shown in FIG. 7, the first terminal sends a random access request to the network device, where the random access request carries the first indication information (that is, the second indication information).

For example, the random access request may be a message 3 (Msg3), where the Msg3 may also be referred to as an RRC setup request (RRC setup request), an RRC resume request (RRC resume request), or an RRC re-establish request (RRC re-establish request). Alternatively, the random access request may be a random number, for example, an RN16/RN8, where the RN16 is a 16-bit random number, and the RN8 is an 8-bit random number, and a bit quantity is not limited, and the random number is used for contention resolution between device A or device B or a passive tag.

In the foregoing implementation, before sending the random access request, the network device may send a paging message to the first terminal. The paging message may carry a user identifier (for example, a UE ID such as a 5g-TMSI or an S-TMSI), a group identifier (for example, a TMGI), or a mask (mask) for indication. Based on this, after receiving the paging message, the first terminal may match the user identifier, the group identifier, the mask, or the like.

If the network device pages the terminal in the first mode or the second mode (that is, the first terminal is in the first mode or the second mode), after sending the paging message, the network device may further send query signaling. The query signaling is sent by device A, device B, or a passive tag, and is used for asynchronous transmission, indicating a time resource allocated to the first terminal for access. Further, after sending the query signaling, the network device may further send some signaling for triggering the first terminal to access, for example, QueryRep signaling, which is used to trigger a random access occasion of the first terminal.

If the network device pages the terminal in the third mode (that is, the first terminal is in the third mode), after sending the paging message, the network device may not send query signaling.

If the first terminal operates in the third mode, the first terminal may further send a preamble before sending the random access request.

Optionally, after receiving the random access request, the network device may send a random access response to the first terminal.

Optionally, after the random access is successful (for example, after receiving the random access response), the first terminal may perform data transmission with the network device, for example, send uplink data to the network device, and/or receive downlink data from the network device.

The first terminal reports the working mode in the random access request, so that the network device may determine a random access manner of the first terminal based on the working mode. For example, if the first terminal works in the third mode, a synchronous access manner may be used, for example, the first terminal may receive system information, a synchronization signal, or the like, determine a random access resource, and perform clock synchronization/frame synchronization with the network device, where the access manner may be based on a two-step or four-step random access. If the first terminal works in the first mode or the second mode, the first terminal does not support system information, and does not support precise clock/frame synchronization with the network device. Therefore, the first terminal may perform asynchronous access based on a downlink trigger signal (for example, query signaling or QueryRep signaling), for example, perform asynchronous access based on an Aloha-based asynchronous access manner.

### Implementation Method 2:

The first terminal may send the first indication information to the AMF network element. Upon receiving the first indication information, the AMF network element sends the second indication information to the network device. For example, as shown in Figure 8, the first terminal may send a registration request (registration request) to the AMF network element through the network device, where the registration request carries the first indication information. The AMF network element then sends the second indication information to the network device. For illustration, the AMF network element may send the second indication information to the network device through a paging message, an NG application protocol (NG application protocol, NG-AP) establishment message, or another N2 message.

In this implementation, the second indication information may indirectly indicate the operating mode (or communication capability) of the first terminal. For example, the second indication information may be the first identifier, where the first identifier is used to represent the operating mode of the first terminal. In this example, the network device may determine the operating mode of the first terminal based on the first identifier.

For example, the AMF network element allocates an identifier to device A in the first identifier set, allocates an identifier to device B in the second identifier set, allocates an identifier to device C in the third identifier set, allocates an identifier to a first terminal having the first mode and the second mode in the fourth identifier set, allocates an identifier to a first terminal having the first mode and the third mode in the fifth identifier set, allocates an identifier to a first terminal having the third mode and the second mode in the sixth identifier set, and allocates an identifier to a first terminal having the first mode, the second mode, and the third mode in the seventh identifier set. The first identifier set includes one or more identifiers, the second identifier set includes one or more identifiers, the third identifier set includes one or more identifiers, the fourth identifier set includes one or more identifiers, the fifth identifier set includes one or more identifiers, the sixth identifier set includes one or more identifiers, and the seventh identifier set includes one or more identifiers.

Optionally, the AMF network element may also allocate an identifier only to the first terminal that supports dual-mode (or multi-mode). Specifically, the AMF network element allocates one identifier to a first terminal that has both the first mode and the second mode in the fourth identifier set, allocates one identifier to a first terminal that has both the first mode and the third mode in the fifth identifier set, allocates one identifier to a first terminal that has both the third mode and the second mode in the sixth identifier set, and allocates one identifier to a first terminal that has the first mode, the second mode, and the third mode in the seventh identifier set.

Alternatively, the second indication information may directly indicate the working mode (or communication capability) of the first terminal. Optionally, the second indication information may be the same as the first indication information, or the second indication information may be different from the first indication information but use a form similar to that of the first indication information. This is not specifically limited herein.

The first terminal reports the working mode in the registration request, and the network device may trigger downlink services based on the working mode of the first terminal. For example, if the first terminal operates in the first mode/second mode, the network device may send a carrier and/or an energy signal (or control/trigger other terminals or network devices to send a carrier and/or an energy signal), so that the first terminal operating in the first mode/second mode performs reflective communication. If the first terminal operates in the third mode, the network device may not need to send a carrier and/or an energy signal (the network device may not need to control/trigger other terminals or network devices to send a carrier and/or an energy signal). In addition, if the first terminal operates in the first mode/second mode, it may not need to receive system information to confirm random access resources, frame number information, cell identification (identification, ID), and other information, nor does it need to rely on synchronization signals for synchronization. If the first terminal operates in the third mode, it may receive system information and/or synchronization signals from the network device to confirm random access resources, frame number information, cell ID, and other information, and perform synchronization accordingly.

Optionally, after obtaining the working mode of the first terminal, the network device may perform data transmission with the first terminal, for example, receive uplink data from the first terminal, and/or send downlink data to the first terminal.

According to the methods described in FIG. 6 to FIG. 8, the network device may obtain the working mode of the first terminal. Optionally, the first terminal may further report the currently used working mode to the network device.

In addition, the network device may further instruct the first terminal having multiple working modes to switch the working mode according to a requirement. Alternatively, the first terminal having multiple working modes may also request to switch the working mode from the network device according to a requirement.

A specific switching method will be described in the following related descriptions in FIG. 9 and FIG. 10.

This application considers introducing a terminal device with at least two working modes for an ambient IoT terminal device. Since research on different working modes is independent of each other and communication manners are different, the first terminal reports its working mode by using a random access request or a registration request, so that the network device can obtain a capability of the first terminal (that is, obtain the working mode of the first terminal), thereby helping the network device align a communication manner with the terminal device, thereby improving communication performance.

The foregoing describes two methods for a network device to obtain the working mode of the first terminal. The following describes a method for the network device to instruct the first terminal having multiple working modes to switch working modes.

It should be noted that the method may be implemented independently without depending on the methods described in FIG. 5 and FIG. 6, or may be implemented in combination with the method in FIG. 5 or FIG. 6 as a solution. Specifically, if the method is combined with the method described in FIG. 5, after obtaining the working mode of the first terminal through the method described in FIG. 5, the network device may instruct the first terminal to switch the working mode through the method described in FIG. 9 during subsequent data transmission. Alternatively, if the method is combined with the method described in FIG. 6, after obtaining the working mode of the first terminal through the method described in FIG. 6, the network device may instruct the first terminal to switch the working mode through the method described in FIG. 9 during subsequent data transmission.

As shown in FIG. 9, the method for the network device to instruct the first terminal to switch working modes includes:
S901: The network device determines to switch the working mode of the first terminal.

The first terminal has at least two working modes of an ambient IoT terminal. For details about the working modes of the ambient IoT terminal, refer to the related descriptions in the foregoing background, and details are not described herein again.

Optionally, before S901, the first terminal may send third indication information to the network device, where the third indication information indicates a current working mode of the first terminal.

In a possible implementation, the first terminal may send at least one of the following information to the network device: indication information of reference signal quality, indication information about a power level, indication information of a data volume, or a service type. The network device determines to switch the working mode of the first terminal based on the information. The data volume may be a transport block size (transport block size, TBS), or may be a buffer (buffer) data volume of the first terminal, or may be a data volume required for service transmission, or the like. In a specific example, the indication information of the data volume may be a buffer status report (buffer status report, BSR).

For example, the indication information of the electric energy may be a remaining electric energy value of the first terminal, or may be a result obtained by subtracting a preset electric energy value from the remaining electric energy value of the first terminal.

Optionally, in the foregoing implementation, the network device may configure a measurement parameter of the reference signal, for example, a reporting condition, for the first terminal. For example, the reporting condition may be a reporting threshold or the like. When the quality of the reference signal meets the reporting condition, the first terminal sends the indication information of the reference signal quality to the network device. In this manner, reporting overheads can be reduced.

For example, the indication information of the reference signal quality may be a parameter such as a reference signal received power (reference signal received power, RSRP), a reference signal received quality (reference signal received quality, RSRQ), a reference signal strength indicator (reference signal strength indication, RSSI), a signal to interference plus noise ratio (signal to interference plus noise ratio, SINR), a signal to noise ratio (signal to noise ratio, SNR), or a block error rate (block error rate, BLER) of the reference signal. Alternatively, the indication information of the reference signal quality may be a dedicated measurement quantity designed for an A-IoT low power consumption device, or the like.

The reference signal may be a reference signal (RS), a synchronization signal, another broadcast signal (such as a system message), or the like.

In another possible implementation, the first terminal may alternatively send at least one of the following information to the network device: first information, second information, third information, or a service type, where the first information is used to indicate a relationship between the reference signal quality and the first signal quality threshold, the second information is used to indicate a relationship between the battery level and the first battery level threshold, and the third information is used to indicate a relationship between the data volume and the first data volume threshold. The network device determines to switch the working mode of the first terminal based on the foregoing information.

In a specific implementation, the first information may indicate whether the reference signal quality is greater than (or less than) the first signal quality threshold. For example, when the first information is 0, it indicates that the reference signal quality is greater than (or less than) the first signal quality threshold; or when the first information is 1, it indicates that the reference signal quality is not greater than (or not less than) the first signal quality threshold. The second information may indicate whether the battery level is greater than (or less than) the first battery level threshold. For example, when the second information is 0, it indicates that the battery level is greater than (or less than) the first battery level threshold; or when the second information is 1, it indicates that the battery level is not greater than (or not less than) the first battery level threshold. The third information may indicate whether the data volume is greater than (or less than) the first data volume threshold. For example, when the third information is 0, it indicates that the data volume is greater than (or less than) the first data volume threshold; or when the third information is 1, it indicates that the data volume is not greater than (or not less than) the first data volume threshold.

In another specific implementation, the first information may be indication information for reference signal quality. In this implementation, the first terminal may report the indication information for the reference signal quality when the reference signal quality is greater than (or less than) the first signal quality threshold, thereby implicitly indicating that the reference signal quality is greater than (or less than) the first signal quality threshold.

The second information may be indication information for the battery level. In this implementation, the first terminal may report the indication information for the battery level when the battery level is greater than (or less than) the first battery level threshold, thereby implicitly indicating that the battery level is greater than (or less than) the first battery level threshold.

The third information may be indication information for the data volume. In this implementation, the first terminal may report the indication information for the data volume when the data volume is greater than (or less than) the first data volume threshold, thereby implicitly indicating that the data volume is greater than (or less than) the first data volume threshold.

Optionally, in the foregoing two implementations, the first signal quality threshold, the first battery level threshold, and the first data volume threshold may be indicated by the network device to the first terminal. For example, if the first terminal enters the non-transmission mode (for example, an idle mode or an inactive mode), the network device may send the foregoing thresholds through dedicated signaling or a system information. Alternatively, the foregoing thresholds may be defined by a protocol.

In the aforementioned implementation, the first terminal may measure the reference signal from the network device to obtain the quality of the reference signal. Optionally, the first terminal may perform reference signal measurement periodically. The measurement period may be configured by the network device or may be defined by a protocol.

It should be noted that the foregoing implementation is described by using an example in which the first terminal measures the reference signal. In specific implementation, it may also be the network device that measures the reference signal from the first terminal to obtain the measurement result of the reference signal.

In another implementation, the AMF network element may also send a mode-switch indication to the network device based on the service type, where the handover indication is used to instruct the first terminal to switch the working mode. In this way, the network device determines the working mode of the first terminal after receiving the handover indication.

It should be understood that this application merely enumerates some information that may affect the working mode, such as reference signal quality, battery level, data volume, service type, and the like. In specific implementation, the network device may also determine the switching of the working mode of the first terminal based on other information, which are not exhaustively listed herein.

In still another implementation, the network device may also determine the working mode of the first terminal based on the uplink signal quality. For example, if determining that the uplink signal quality is relatively poor, the network device determines that the first terminal switches to the third mode. For example, a manner in which the network device determines that the uplink signal quality is relatively low includes but is not limited to: a quantity of times of uplink signal decoding failures (or errors) reaches a threshold, or no uplink signal is received within preset duration, or the like. In this manner, coverage and signal quality of an uplink signal can be improved.

In another implementation, the network device may also determine, based on whether there is an excitation source (helper device), to switch the working mode. The excitation source may be a device that sends a carrier wave (carrier wave) (for example, may be a first terminal or a network device). Alternatively, the excitation source may be a device (for example, the first terminal or a network device) that sends a radio frequency signal/wireless charging signal (radio frequency/energy) to wirelessly charge the first terminal.

If there is no stimulus source, the network device may determine to switch the first terminal to the third mode; or if there is a stimulus source, the network device may determine to switch the first terminal to the first mode or the second mode.

S902: The network device sends a first message to the first terminal. Correspondingly, the first terminal receives the first message from the network device.

The first message is used to indicate switching of the working mode.

In an implementation, the first message may indicate an action of switching the working mode by the first terminal. In this implementation, after receiving the first message, the first terminal switches the current working mode to another working mode. For example, the first terminal currently works in the first mode or the second mode, and switches to the third mode after receiving the first message.

In another implementation, the first message may indicate a post-switching working mode. For example, the first message may indicate the third mode, and the first terminal switches to the third mode after receiving the first message.

In still another implementation, the first message may indicate a communication capability corresponding to the switched working mode. For example, the first message may indicate a reflective communication capability, and the first terminal switches to the first mode/second mode after receiving the first message. For another example, the first message may indicate the active communication capability, and the first terminal switches to the third mode after receiving the first message.

Optionally, after receiving the first message, the first terminal may send a response message of the first message to the network device. The response message may be a response message used to indicate acceptance of the switch/switch success, or may be a response message used to indicate rejection of the switch/switch failure. In this manner, the working mode of the first terminal can be aligned on both the network side and the first terminal side, which is beneficial for the communication quality between the first terminal and the network device.

The following will explain the relationship between the aforementioned information and the operating mode of the first terminal with reference to specific examples.

Taking business types as an example:
An example is as follows: if the business type is inventory-related, the first terminal may be instructed to operate in the first mode or the second mode; if the business type is sensor-related, the first terminal may be instructed to operate in the third mode.

In another example, if the service type is an MO service, it may indicate that the working mode of the first terminal is the third mode.

If the service type is an MT service, and the service is triggered by select signaling or query signaling, when the reference signal quality is greater than (or not less than) the first signal quality threshold, the working mode of the first terminal may be indicated to be the first mode or the second mode; or when the reference signal quality is not greater than (or less than) the first signal quality threshold, the working mode of the first terminal may be indicated to be the third mode. If the service type is an MT service, and the service is triggered by a paging message, the working mode of the first terminal may be indicated to be the third mode.

Optionally, the quantity of to-be-assigned access resources may be related to the quantity of first terminals.

Alternatively, if the service type is an MT service, and the service is triggered by select signaling or query signaling, the working mode of the first terminal may be indicated to be the first mode or the second mode. If the service type is an MT service, and the service is triggered by a paging message, the working mode of the first terminal may be indicated to be the third mode.

The quality of the parameter signal is used as an example:
An example is as follows: if the reference signal quality is greater than (or not less than) the first signal quality threshold, the working mode of the first terminal may be instructed to switch to the first mode or the second mode. If the reference signal quality is not greater than (or less than) the first signal quality threshold, the working mode of the first terminal may be instructed to switch to the third mode. In the foregoing manner, when the reference signal quality is poor (indicating that the channel quality is poor), the first terminal is switched to the third mode, which helps ensure communication quality. When the reference signal quality is relatively good (indicating that the channel quality is relatively good), the first terminal is switched to the first mode or the second mode, which can reduce power consumption of the first terminal and save power.

The battery level is used as an example:
An example is as follows: if the battery level is not greater than (or less than) the first battery level threshold, the working mode of the first terminal may be instructed to switch to the first mode or the second mode. If the battery level is greater than (or not less than) the first battery level threshold, the working mode of the first terminal may be instructed to switch to the third mode. In the foregoing manner, when the battery level is relatively low, the first terminal is switched to the first mode or the second mode, which can reduce power consumption of the first terminal and save power.

Using the data volume as an example:
An example is as follows: if the data volume is not greater than (or less than) the first data volume threshold, the first terminal may be instructed to switch the working mode to the first mode or the second mode. If the data volume is greater than (or not less than) the first data volume threshold, the first terminal may be instructed to switch the working mode to the third mode. The transmission rate of the first mode/second mode is limited, and when the amount of data to be transmitted is too large, a long transmission time may result, wasting resources. The third mode has a high transmission rate and can handle a larger amount of data. In the foregoing manner, when the data volume is large, the third mode is switched to, thereby improving the transmission rate and saving resources.

By using the foregoing manner, the network device can flexibly switch the working mode of the first terminal, and instruct the first terminal to use different working modes in different scenarios, which helps improve communication quality or reduce power consumption of the first terminal, and so on. For example, when the signal quality is relatively poor, the first terminal is instructed to switch to the third mode with better communication capability, which helps improve communication quality between the first terminal and the network device. For another example, when the battery level is relatively low, the first terminal is instructed to switch to the first mode/second mode with lower power consumption, which can reduce power consumption of the first terminal on one hand, and prevent communication interruption caused by excessively fast battery consumption of the first terminal on the other hand.

The foregoing describes a method in which a network device instructs a first terminal to switch a working mode when the first terminal has multiple working modes. The following describes a method in which the first terminal requests to switch a working mode.

It should be noted that the method may be implemented independently without depending on the methods described in FIG. 5 and FIG. 6, or may be implemented together with the method in FIG. 5 or FIG. 6 as a solution. Specifically, if the method is combined with the method in FIG. 5, after the network device obtains the working mode of the first terminal by using the method in FIG. 5, the first terminal may request to switch the working mode in a subsequent data transmission process by using the method in FIG. 10. Alternatively, if the method is combined with the method in FIG. 6, after the network device obtains the working mode of the first terminal by using the method in FIG. 6, the first terminal may request to switch the working mode in a subsequent data transmission process by using the method in FIG. 10.

Optionally, before or after the first terminal requests to switch the working mode, the network device may also instruct the first terminal to switch the working mode. For details, refer to the method in FIG. 9. This is not specifically limited herein.

As shown in FIG. 10, a method for requesting to switch a working mode by the first terminal includes the following steps:
S1001: The first terminal determines to switch the working mode.

The first terminal has at least two working modes of the ambient IoT terminal. For details about the working modes of the ambient IoT terminal, refer to the related descriptions in the foregoing background, and details are not described herein again.

In a possible implementation, the first terminal may determine to switch the working mode based on at least one of the following: reference signal quality, a battery level, a data volume, or a service type. The data volume may be a TBS, or may be a data volume in a buffer of the first terminal, or the like.

Specifically, the first terminal may determine to switch the working mode based on at least one of the following: fourth information, fifth information, sixth information, or a service type, where the fourth information includes the reference signal quality and the second signal quality threshold, the fifth information includes the battery level and the second battery level threshold, and the sixth information includes the data volume and the second data volume threshold.

For example, the indication information for the reference signal quality may be a parameter such as an RSRP/RSRQ/RSSI/SINR/SNR/BLER of the reference signal.

It should be understood that this application merely lists some information (such as reference signal quality, a battery level, a data volume, and a service type) that may affect the working mode. In specific implementation, the network device may further determine to switch the working mode of the first terminal based on other information, which is not listed one by one herein.

Optionally, the second signal quality threshold, the second battery level threshold, and the second data volume threshold may be indicated by the network device to the first terminal. For example, if the first terminal enters the non-transmission mode (for example, an idle mode or an inactive mode), the network device may send the thresholds through dedicated signaling or a system message. Alternatively, the thresholds may be defined by a protocol.

It should be noted that the second signal quality threshold, the second battery level threshold, and the second data volume threshold in the method in FIG. 10 are used by the terminal device to determine to switch the working mode, and the first signal quality threshold, the first battery level threshold, and the first data volume threshold in the method in FIG. 9 are used by the network device to determine to switch the working mode. The thresholds (namely, the second signal quality threshold, the second battery level threshold, and the second data volume threshold) used by the terminal device to determine to switch the working mode may be the same as or different from the thresholds (namely, the first signal quality threshold, the first battery level threshold, and the first data volume threshold) used by the network device to determine to switch the working mode, which is not specifically limited herein.

In an example, the thresholds (namely, the second signal quality threshold, the second power threshold, and the second data volume threshold) used by the terminal device to determine whether to switch the working mode are the same as the thresholds (namely, the first signal quality threshold, the first power threshold, and the first data volume threshold) used by the network device to determine whether to switch the working mode, that is, the first signal quality threshold, the first power threshold, and the first data volume threshold are used to implement both the solution for the terminal device to determine whether to switch the working mode and the solution for the network device to determine whether to switch the working mode. In this example, the network device may configure (or the protocol may define) the first signal quality threshold, the first power threshold, and the first data volume threshold, and the network device does not need to configure (or the protocol does not need to define) the second signal quality threshold, the second power threshold, and the second data volume threshold.

In the foregoing example, in the solution for the terminal device to determine whether to switch the working mode, the terminal device may determine whether to switch the working mode based on the first signal quality threshold, the first power threshold, and the first data volume threshold; and in the solution for the network device to determine whether to switch the working mode, the terminal device may report a relationship between the reference signal quality and the first signal quality threshold, a relationship between the power and the first power threshold, and a relationship between the data volume and the first data volume threshold.

In the aforementioned implementation, the first terminal may measure the reference signal from the network device to obtain the quality of the reference signal. Optionally, the first terminal may perform reference signal measurement periodically. The measurement period may be configured by the network device or may be defined by a protocol.

In another implementation, the first terminal may also determine whether to switch the operating mode based on the presence or absence of an excitation source (helper device). The excitation source may be a device that transmits a carrier wave (for example, the first terminal or a network device), or the excitation source may be a device that transmits a radio frequency signal/wireless charging signal (radio frequency/energy) for wireless charging of the first terminal (for example, the first terminal or a network device).

If there is no excitation source, the first terminal may determine to switch to the third mode; if there is an excitation source, the first terminal may determine to switch to the first mode/second mode.

S1002: The first terminal sends a second message to the network device. Correspondingly, the network device receives the second message.

The second message is used to request switching of the operating mode. The relationship between the above information and the operating mode of the first terminal can be referred to the relevant descriptions in the method described in Figure 9, and will not be repeated here.

For example, the second message may be a random access request, such as Msg3, where Msg3 may be referred to the relevant descriptions in the method described in FIG. 6. That is, the first terminal may request a mode of operation switch through the random access request.

Alternatively, the second message mentioned above may also be a random number RN16/RN8. That is, the first terminal may request to switch the working mode through the random number RN16/RN8.

Optionally, after receiving the second message, the network device may send a response message of the second message to the first terminal. This response message may be a response message used to indicate acceptance of switching/permission for switching, or may be a response message used to indicate rejection of switching. In this way, the working mode of the first terminal can be aligned between the network side and the first terminal side, which is beneficial for the communication quality between the first terminal and the network device. It can be understood that if the response message is used to indicate acceptance of handover/permission for handover, the first terminal switches the working mode after receiving the response message. If the response message is used to indicate rejection of handover, the first terminal does not switch the working mode after receiving the response message.

In an implementation, the second message may request the first terminal to perform an action of switching a working mode. In this implementation, after sending the second message (specifically, after receiving a response message used to indicate acceptance of switching/permission for switching), the first terminal switches the current working mode to another working mode. For example, the first terminal currently works in the first mode/the second mode, and switches to the third mode after sending the second message.

In another implementation, the second message may indicate a working mode after the switching. For example, the second message may indicate the third mode, and the first terminal switches to the third mode after sending the second message (specifically, after receiving a response message used to indicate acceptance of switching/permission for switching).

In still another implementation, the second message may indicate a communication capability corresponding to the working mode after the switching. For example, the second message may indicate a reflective communication capability, and the first terminal switches to the first mode/the second mode after sending the second message (specifically, after receiving a response message used to indicate acceptance of switching/permission for switching). For another example, the second message may indicate an active communication capability, and the first terminal switches to the third mode after sending the second message (specifically, after receiving a response message used to indicate acceptance of switching/permission for switching).

In the foregoing manner, the first terminal may switch the working mode according to a requirement, and request to switch to the working mode in different scenarios, which helps improve communication quality or reduce power consumption of the first terminal, and the like. For example, when the signal quality is relatively poor, a request is sent to switch to the third mode with better communication capability, which helps improve communication quality between the first terminal and the network device. For another example, when the battery level is relatively low, a request is sent to switch to the first mode/second mode with lower power consumption, which can reduce power consumption of the first terminal on one hand, and prevent communication interruption caused by excessively fast power consumption of the first terminal on the other hand.

Based on the same inventive concept as the method embodiments, an embodiment of this application provides a communications apparatus. A structure of the communications apparatus may be shown in FIG. 11, and includes a communications unit 1101 and a processing unit 1102.

In an implementation, the communications apparatus may be specifically configured to implement the method performed by the first terminal device in the embodiment in FIG. 5. The apparatus may be the first terminal device itself, or may be a chip or a chipset in the first terminal device, or a part of a chip that is configured to perform a function of the related method. The processing unit 1102 is configured to: receive, by using the communications unit 1101, a paging message, where the paging message is used to page a first-type terminal device, and the first-type terminal device has at least two working modes of an environmental Internet of Things terminal device; and if the first-type terminal device has at least two working modes of the environmental Internet of Things terminal device, send a random access request by using the communications unit 1101.

In an implementation, the communication apparatus may be specifically configured to implement the method performed by the first terminal device in the embodiment in FIG. 6. The apparatus may be the first terminal device itself, or may be a chip or a chipset in the first terminal device, or may be a part of the chip that is configured to perform functions of the related method. The processing unit 1102 is configured to send first indication information by using the communications unit 1101, where the first indication information indicates an operating mode of a terminal device, and the terminal device has at least two operating modes of an Ambient Internet of Things (IoT) terminal device.

Further, on a basis of implementing the method performed by the first terminal device in the embodiment in FIG. 5 or FIG. 6, the communication apparatus may further implement the method performed by the first terminal device in the embodiment in FIG. 9. Specifically, the processing unit 1102 is further configured to receive a first message by using the communications unit 1101, where the first message is used to indicate a mode of switching an operating mode.

Optionally, the processing unit 1102 is further configured to: before the receiving, by using the communications unit 1101, the first message, send at least one of the following by using the communications unit 1101: indication information for reference signal quality, indication information for an power level, indication information for a data volume, or indication information for a service type.

Optionally, the processing unit 1102 is further configured to: before the receiving, by using the communications unit 1101, the first message, send at least one of the following by using the communications unit 1101: first information, second information, third information, or a service type, where the first information indicates a relationship between reference signal quality and a first signal quality threshold, the second information indicates a relationship between a battery level and a first battery level threshold, and the third information indicates a relationship between a data volume and a first data volume threshold.

Optionally, the processing unit 1102 is further configured to receive, by using the communications unit 1101, at least one of the following: the first signal quality threshold, the first battery level threshold, or the first data volume threshold.

Further, on the basis of implementing the method performed by the first terminal device in the embodiment in FIG. 5 or FIG. 6, the communications apparatus may further implement the method performed by the first terminal device in the embodiment in FIG. 10. Specifically, the processing unit 1102 is configured to determine the switching the working mode based on at least one of the following: fourth information, fifth information, sixth information, or a service type, where the fourth information includes reference signal quality and a second signal quality threshold, the fifth information includes a battery level and a second battery level threshold, and the sixth information includes a data volume and a second data volume threshold; and the communications unit 1101 is configured to send a second message, where the second message is used to request to switch the working mode.

Optionally, the processing unit 1102 is further configured to receive, by using the communications unit 1101, at least one of the following: the second signal quality threshold, the second battery level threshold, and the second data volume threshold.

In an implementation, the communication apparatus may be specifically configured to implement the method performed by the network device in the embodiment in FIG. 5. The apparatus may be the network device itself, or may be a chip or a chipset in the network device, or a part of a chip used to perform functions of the related method. The processing unit 1102 is configured to: send a paging message by using the communications unit 1101, where the paging message is used to page a first-type terminal device, and the first-type terminal device has at least two working modes of an ambient IoT terminal device; and receive a random access request by using the communications unit 1101.

In an implementation, the communication apparatus may be specifically configured to implement the method performed by the network device in the embodiment in FIG. 6. The apparatus may be the network device itself, or may be a chip or a chipset in the network device, or a part of a chip used to perform functions of the related method. The processing unit 1102 is configured to receive second indication information by using the communications unit 1101, where the second indication information indicates a working mode of a terminal device, and the terminal device has at least two working modes of an ambient IoT terminal device.

Furthermore, on the basis of implementing the method performed by the network device in the embodiment in FIG. 5 or FIG. 6, the communication apparatus may further implement the method performed by the network device in the embodiment in FIG. 9. Specifically, the processing unit 1102 is further configured to send a first message by using the communication unit 1101, where the first message is used to indicate a mode of switching.

Optionally, the processing unit 1102 is further configured to receive, by using the communication unit 1101, at least one of the following: indication information about reference signal quality, indication information about an power level, indication information about a data volume, or a service type; and determine the working mode for switching according to at least one of the following: the reference signal quality, the power level, the data volume, or the service type.

Optionally, the processing unit 1102 is further configured to receive, by using the communication unit 1101, at least one of the following: first information, second information, third information, or a service type, where the first information is used to indicate a relationship between the reference signal quality and a first signal quality threshold, the second information is used to indicate a relationship between an power level and a first power level threshold, and the third information is used to indicate a relationship between a data volume and a first data volume threshold; and determine the working mode of the terminal device for switching according to at least one of the following: the first information, the second information, the third information, or the service type.

Optionally, the processing unit 1102 is further configured to send, by using the communications unit 1101, at least one of the following: the first signal quality threshold, the first power threshold, or the first data volume threshold.

Further, on the basis of implementing the method performed by the network device in the embodiment in FIG. 5 or FIG. 6, the communications apparatus may further implement the method performed by the network device in the embodiment in FIG. 10. Specifically, the communications unit 1101 is further configured to receive a second message, where the second message is used to request to switch the working mode.

Optionally, the communications unit 1101 is further configured to send at least one of the following: a second signal quality threshold, a second power threshold, or a second data volume threshold.

In an implementation, the communications apparatus may be specifically configured to implement the method performed by the core network device in the embodiment in FIG. 6. The apparatus may be the core network device itself, or may be a chip, a chipset, or a part of a chip used to perform a function of the related method in the core network device. The processing unit 1102 is configured to: receive, by using the communications unit 1101, first indication information from a terminal device, where the first indication information indicates a working mode of the terminal device, and the terminal device has at least two working modes of an ambient IoT terminal device; and send second indication information to a network device by using the communications unit 1101, where the second indication information indicates the working mode of the terminal device.

Optionally, the processing unit 1102 is specifically configured to receive a registration request through the communications unit 1101, where the registration request carries the indication information.

Optionally, the processing unit 1102 is specifically configured to send a paging message through the communications unit 1101, where the paging message carries the indication information.

The division into the modules in the embodiments of this application is an example, and is merely a logical function division. There may be another division manner in actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module. It may be understood that for further functions or implementations of the modules in the embodiments of this application, refer to related descriptions in the method embodiments.

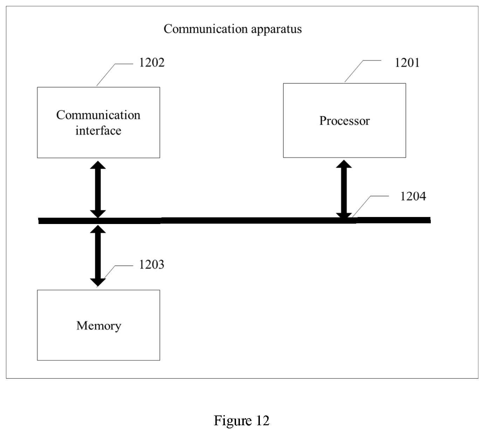

In a possible manner, the communication apparatus may be shown in FIG. 12. The apparatus may be a communication device or a chip in a communication device, where the communication device may be the terminal device in the foregoing embodiments, or may be the core network device in the foregoing embodiments. The apparatus includes a processor 1201 and a communications interface 1202, and may further include a memory 1203. The processing unit 1102 may be the processor 1201. The communications unit 1101 may be the communications interface 1202. Optionally, the processor 1201 and the memory 1203 may also be integrated together.

The processor 1201 may be a CPU, a digital processing unit, or the like. The communication interface 1202 may be a transceiver, an interface circuit such as a transceiver circuit, a transceiver chip, or the like. The apparatus further includes a memory 1203, configured to store a program executed by the processor 1201. The memory 1203 may be a non-volatile memory, for example, a hard disk drive (hard disk drive, HDD) or a solid-state drive (solid-state drive, SSD), or may be a volatile memory (volatile memory), for example, a random access memory (random-access memory, RAM). The memory 1203 is any other medium that can carry or store expected program code in a form of an instruction or a data structure and that can be accessed by a computer, but is not limited thereto.

The processor 1201 is configured to execute the program code stored in the memory 1203, and is specifically configured to perform the actions of the processing unit 1102, which is not described in detail in this application. The communication interface 1202 is specifically configured to perform the actions of the communications unit 1101, which is not described in detail in this application.

In the embodiments of this application, the specific connection medium between the communications interface 1202, the processor 1201, and the memory 1203 is not limited. In the embodiments of this application, in FIG. 12, the memory 1203, the processor 1201, and the communications interface 1202 are connected through a bus 1204. The bus is represented by a thick line in FIG. 12. A connection manner between other components is merely an example for description, and is not intended to be limiting. Buses may be classified into an address bus, a data bus, a control bus, and the like. For ease of representation, only one thick line is used to represent the bus in FIG. 12, but this does not indicate that there is only one bus or only one type of bus.

An embodiment of the present invention further provides a computer-readable storage medium, configured to store computer software instructions for performing the foregoing functions of the processor, where the computer software instructions include a program for performing the foregoing functions of the processor.

An embodiment of this application further provides a communications system, including a communications apparatus configured to implement a function of the terminal device in the embodiment in FIG. 4, and a communications apparatus configured to implement a function of the core network device in the embodiment in FIG. 4. The communications system may further include a communications apparatus configured to implement a function of the network device in the embodiment in FIG. 4.

A person skilled in the art should understand that embodiments of this application may be provided as a method, a system, or a computer program product. Therefore, this application may be implemented in the form of an entirely hardware embodiment, an entirely software embodiment, or an embodiment that combines software and hardware aspects. In addition, this application may be implemented in the form of a computer program product implemented on one or more computer-usable storage media (comprising but not limited to, disk storage, CD-ROMs, optical storage, and the like) that include computer-usable program code.

This application is described with reference to flowcharts and/or block diagrams of methods, devices (systems), and computer program products according to this application. It should be understood that each of the processes and/or blocks in the flowcharts and/or block diagrams, and combinations of the processes and/or blocks in the flowcharts and/or block diagrams, may be implemented by computer program instructions. These computer program instructions may be provided to a processor of a general-purpose computer, a special-purpose computer, an embedded processor, or another programmable data processing device to produce a machine, so that the instructions executed by a processor of a computer or another programmable data processing device generate an apparatus for implementing a specific function in one or more processes in the flowcharts and/or in one or more blocks in the block diagrams.

These computer program instructions may also be stored in a computer-readable memory that is capable of causing a computer or other programmable data processing device to operate in a specific manner, thereby creating an article of manufacture that includes instructions for implementing the functions specified in one or more processes in the flowcharts and/or in one or more blocks in the block diagrams.

These computer program instructions may also be loaded onto a computer or other programmable data processing device, so that the computer or other programmable device performs a series of operational steps to generate computer-implemented processing, thereby providing steps for implementing the functions specified in one or more processes in the flowcharts and/or in one or more blocks in the block diagrams when the instructions are executed on the computer or other programmable device.

It is clearly understood that the skilled person can make various modifications and variations to this application without departing from the spirit and scope of this application. Thus, if these modifications and variations of this application fall within the scope of the claims of this application and their equivalent technologies, this application is also intended to cover these modifications and variations.

## Claims

1. A communication method, applied to a first terminal device, wherein the method comprises:
receiving a paging message, wherein the paging message is used to page a first-type terminal device, and the first-type terminal device has at least two working modes of an ambient IoT terminal device;
if the first terminal device has at least two working modes of an ambient IoT terminal device, sending a random access request.

2. The method according to claim 1, wherein the paging message further indicates a working mode that needs to be supported by the first-type terminal device.

3. The method according to claim 1 or 2, wherein the working mode of the ambient IoT terminal device comprises a first mode, a second mode, or a third mode, wherein the first mode and the second mode support reflective communication, the third mode supports active communication, and power consumption in the first mode is less than power consumption in the second mode.

4. The method according to any one of claims 1 to 3, wherein the method further comprises:
receiving a first message, wherein the first message is used to indicate switching of the working mode.

5. The method according to claim 4, wherein before the receiving the first message, the method further comprises:
sending at least one of the following: indication information for reference signal quality, indication information for an power level, indication information for a data volume, or a service type.

6. The method according to claim 4, wherein before the receiving the first message, the method further comprises:
sending at least one of the following: first information, second information, third information, or a service type, wherein the first information indicates a relationship between reference signal quality and a first signal quality threshold, the second information indicates a relationship between a battery level and a first battery level threshold, and the third information indicates a relationship between a data volume and a first data volume threshold.

7. The method according to claim 6, wherein the method further comprises:
receiving at least one of the following: the first signal quality threshold, the first battery level threshold, or the first data volume threshold.

8. The method according to any one of claims 1 to 7, wherein the method further comprises:
determining the working mode switching based on at least one of the following: a reference signal quality and a second signal quality threshold, a battery level and a second battery level threshold, an amount of data and a second data volume threshold, or a service type;
sending a second message, wherein the second message is used to request to switch the working mode.

9. The method according to claim 8, wherein the method further comprises:
receiving at least one of the following: the second signal quality threshold, the second battery level threshold, or the second data volume threshold.

10. The method according to any one of claims 1 to 9, wherein the method comprises:
sending third indication information, wherein the third indication information indicates an operating mode of the first terminal device.

11. A communication method, wherein the method comprises:
sending a paging message, wherein the paging message is used to page a first-type terminal device, and the first-type terminal device has at least two operating modes of an ambient IoT terminal device;
receiving a random access request.

12. The method according to claim 11, wherein the paging message further indicates a working mode that needs to be supported by the first-type terminal device.

13. The method according to claim 11 or 12, wherein the working mode of the Ambient IoT terminal device comprises a first mode, a second mode, or a third mode, wherein the first mode and the second mode support reflective communication, the third mode supports active communication, and power consumption in the first mode is less than power consumption in the second mode.

14. The method according to any one of claims 11 to 13, wherein the method further comprises:
sending a first message, wherein the first message is used to indicate switching of the working mode.

15. The method according to claim 14, wherein the method further comprises:
receiving at least one of the following: indication information of reference signal quality, indication information of an power level, indication information of a data volume, or a service type;
determining the working mode of the terminal device based on at least one of the following: the reference signal quality, the battery level, the data volume, or the service type.

16. The method according to claim 14, wherein the method further comprises:
receiving at least one of the following: first information, second information, third information, or a service type, wherein the first information is used to indicate a relationship between the reference signal quality and a first signal quality threshold, the second information is used to indicate a relationship between the battery level and a first battery level threshold, and the third information is used to indicate a relationship between the data volume and a first data volume threshold;
determining the working mode of the terminal device based on at least one of the following: the first information, the second information, the third information, or the service type.

17. The method according to claim 16, wherein the method further comprises:
sending at least one of the following: the first signal quality threshold, the first battery level threshold, or the first data volume threshold.

18. The method according to any one of claims 11 to 17, wherein the method further comprises:
receiving a second message, wherein the second message is used to request switching of an operating mode.

19. The method according to claim 18, wherein the method further comprises:
sending at least one of the following: a second signal quality threshold, a second battery level threshold, or a second data volume threshold.

20. The method according to any one of claims 11 to 19, wherein the method comprises:
receiving third indication information, wherein the third indication information indicates an operating mode of a first terminal device.

21. A communication method, wherein the method comprises:
receiving first indication information from a terminal device, wherein the first indication information indicates an operating mode supported by the terminal device, and the terminal device has at least two operating modes of an ambient IoT terminal device;
sending second indication information to a network device, wherein the second indication information indicates an operating mode supported by the terminal device.

22. The method according to claim 21, wherein the first indication information is carried in a registration request.

23. The method according to claim 21 or 22, wherein the second indication information is carried in a paging message.

24. The method according to claim 23, wherein the second indication information is a first identifier, and the first identifier is used to indicate an operating mode of the first terminal device.

25. The method according to any one of claims 21 to 24, wherein the operating mode of the ambient IoT terminal device comprises a first mode, a second mode, or a third mode, wherein the first mode and the second mode support reflective communication, the third mode supports active communication, and power consumption in the first mode is less than power consumption in the second mode.

26. A communication apparatus, comprising a unit or module configured to perform the method according to any one of claims 1 to 10, or comprising a unit or module configured to perform the method according to any one of claims 11 to 20, or comprising a unit or module configured to perform the method according to any one of claims 21 to 25.

27. A computer-readable storage medium, wherein the computer-readable storage medium stores computer-readable instructions, and when the computer-readable instructions are run on a communication apparatus, the method according to any one of claims 1 to 10, or the method according to any one of claims 11 to 20, or the method according to any one of claims 21 to 25 is performed.

28. A computer program product, wherein when the computer program product is run on a device, the device is enabled to perform the method according to any one of claims 1 to 25.
